# EUROPEAN PATENT SPECIFICATION

(11) **EP 3 042 842 B1**
(45) Date of publication and mention of the grant of the patent: **14.08.2019**
(21) Application number: 16156367.1
(22) Date of filing: 29.03.2012
(51) Int. Cl.: B63B 1/38

(54) **RESISTANCE REDUCTION APPARATUS FOR SHIP AND SHIP PROVIDED THEREWITH**
WIDERSTANDSREDUZIERUNGSVORRICHTUNG FÜR SCHIFF UND DAMIT AUSGESTATTETES SCHIFF
APPAREIL DE RÉDUCTION DE RÉSISTANCE POUR NAVIRE ET NAVIRE ÉQUIPÉ DE CELUI-CI

(30) Priority: 31.03.2011 JP 2011078816; 04.04.2011 JP 2011082550; 04.04.2011 JP 2011082540
(43) Date of publication of application: 13.07.2016
(62) Divisional of application: 12764684.2
(73) Proprietor: Mitsubishi Shipbuilding Co., Ltd., Yokohama-shi Kanagawa 220-8401 (JP)
(72) Inventor: Takano, Shinichi, Tokyo, 108-8215 (JP); Kawabuchi, Makoto, Tokyo, 108-8215 (JP); Kawakita, Chiharu, Tokyo, 108-8215 (JP); Mizokami, Shuji, Tokyo, 108-8215 (JP); Yamato, Kuniaki, Tokyo, 108-8215 (JP)
(74) Representative: Henkel, Breuer & Partner

(56) References cited:
- JP-A- H1 024 891
- JP-A- H09 226 673
- JP-A- H10 175 588
- JP-A- H11 291 972
- JP-A- H11 321 775
- JP-A- 2000 255 477
- JP-A- 2008 018 781

## Description

### Technical Field

The present invention relates to a ship, and especially to a ship with a frictional resistance reduction apparatus.

### Background Art

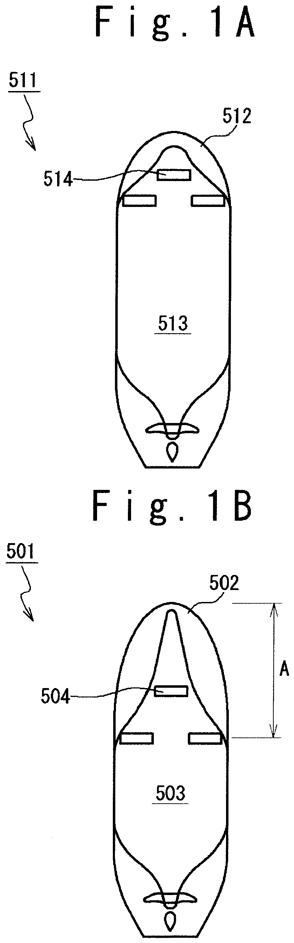

As one method of reducing the resistance which acts on the hull of a ship, a method of blowing out air in the form of air bubbles from a ship bottom to cover the whole of ship bottom with the air bubbles is known. In the above method, an air blowing section is provided mainly for a flat ship bottom. FIG. 1A is a bottom view schematically showing the ship employing such a resistance reduction technique (the frictional resistance reduction ship). A Ship 511 is provided with air blowing sections 514 at the flat ship bottom 513 of a hull 512. The air blowing section 514 is provided for the flat ship bottom 513 so as to stably cover the whole of ship bottom 513 with a film of air bubbles. Thus, the resistance of the seawater which acts on the hull 512 can be reduced. Such a technique is effective to a ship which has a relatively large area of the flat ship bottom, e.g. a relatively large ship block coefficient (Cb). Because such a ship has a large ratio of the flat ship bottom, the ship bottom is covered with the air bubble, which results in attainment of the large resistance reduction effect.

As mentioning above, the above-mentioned technique is more effective in the ship which has a relatively large flat bottom area as shown in FIG. 1A. On the other hand, relatively, in case of a ship having a small area of the flat ship bottom, e.g. having a relatively small block coefficient, the situation differs. FIG. 1B is a ship bottom view schematically showing a ship having the relatively small area of the flat ship bottom and introduced with the resistance reduction technique like FIG. 1A. A ship 501 is provided with air blowing sections 504 in a flat ship bottom 503 of a hull 502. In this case, the ship 501 is small in the area of the flat ship bottom 503, compared with the ship like FIG. 1A. Therefore, the area covered with air bubbles is small. For example, a range of the bow section which is shown by A in FIG. 1B is hardly covered with the air bubbles. As a result, even if the above technique is applied to the ship shown in FIG. 1B, it is difficult to attain the sufficient friction resistance reduction effect.

In order to increase the area covered with the air bubbles in the ship having a relatively small area of the flat ship bottom, the air blowing section is provided in the ship side of the bow section to cover a range A with the air bubbles. Thus, it becomes possible to increase the area covered with the air bubbles, including the ship side and the ship bottom which is not flat. At this time, the air diffusion performance of an air supply chamber in the air blowing section undergoes influence of a head (water depth). For example, in the identical chamber, the diffusion of air for the supply decreases in the neighborhood of the holes of the air blowing section in a deeper water depth. As a result, it could be considered that an air blowing quantity deviates depending on the position of the holes, especially, the water depth, even in the same air blowing section provided for the ship side. Also, when providing the air blowing section for the ship side of the bow section, the air bubble density tends to become low in the longitudinal direction of the central section. Therefore, there is a possibility that it is not possible to cover the ship bottom with the air bubbles having an enough density.

As the related techniques, a frictional resistance reduction ship is disclosed in JP H09-226673A. In the frictional resistance reduction ship, a large amount of gas blowing holes are formed on a wall section at position having a low still pressure in a region of stream lines from the ship bottom to the stern section in an immersion section of a hull surface in the bow section, and a pipe member having closed ends is attached to face into a direction from the bow section to the stern section. The pipe member is supposed to be an air diffusing chamber. Moreover, the pipe member is connected directly to the pressured air supply apparatus through the air supply pipe through an air supply pipe.

A frictional resistance reduction ship disclosed in JP H09-226673A is provided with a pipe member attached from outside the hull at a position under a draft line of the bow ship side. A large number of air blowing holes are formed in the pipe member, whose both ends are closed. An air diffusing room is formed in the pipe member. The pipe member is connected with a blower through the air supply pipe. The pressured air is blown out from the air blowing holes to generate minute air bubbles.

Here, because the pipe member is attached to the outside of the hull, there is a possibility that resistance has increased due to the pipe member.

Also, a frictional resistance reduction apparatus for a ship is disclosed in JP H10-100984A. In the frictional resistance reduction apparatus, an opening section longer in a direction from a bow section to a stern section is provided on a hull shell placing of the bow section, and a sea chest is attached to the inside of the hull shell plating to surround the opening section. A back section is opened and a large number of gas flowing openings are formed in a front section. A plurality of air blowing boxes, in which air passages are formed in ship sides opposing to the direction from the bow section to the stern section, is engaged with the sea chest in parallel such that the front section is exposed in the opening section, to form the air blowing unit. Moreover, an air supply pipe for supplying the pressured air is connected to a position opposing to the back section of the gas blowing unit of the sea chest.

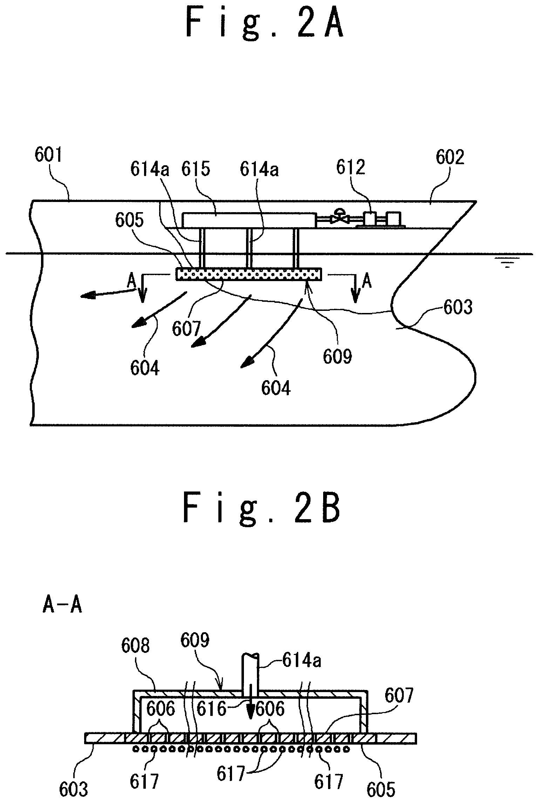

JP H10-100984A discloses a frictional resistance reduction apparatus which does not have any part to protrude to the outside of the hull. Referring to FIG. 2A and FIG. 2B, the frictional resistance reduction apparatus disclosed in JP H10-100984A will be described. FIG. 2A is a side view of the bow section of the hull in which a frictional resistance reduction apparatus is provided, and FIG. 2B is a sectional view showing the frictional resistance reduction apparatus along the line A-A in FIG. 2A.

A longer opening 605 is provided in a direction from the bow section to the stern section on the hull shell plating 603 at a position of a small still pressure (position slightly below the draft line) in a streamline area where streamlines 604 direct to each direction of the ship bottom and the stern in the underwater section of the bow section 602 of the hull 601. The porous plate 607 in which a large number of air blowing openings 606, is attached to the opening 605. The sea chest 608 is provided to surround the air blowing mouth 606 inside the porous plate 607, to configure the air blowing unit 609. A blower 612 is installed on a deck of the bow section 602. The blower 612 is connected with a distribution header 615. The distribution header 615 is connected with the sea chest 608 through the air supply pipe 614a. Minute air bubbles 617 are formed by blowing the pressured air 616 from the air blowing mouth 606.

Here, as shown in FIG. 2B, the air supply pipe 614a is connected with the sea chest 608, and the air supply pipe 614a blows out the air for the porous plate 607. Therefore, a large amount of air blows from the air blowing opening 606 in the front of the air supply pipe 614a but only a little air blows from the air blowing openings 606 which are not in front of the air supply pipe 614a. Also, because a lower air blowing opening 606 receives a high water pressure, a large amount of air blows from the upper air blowing opening 606 and only a little air is blown from the lower air blowing opening 606.

Also, a frictional resistance reduction ship is disclosed in JP H11-291972A. In the frictional resistance reduction ship, a main gas blowing unit is provided at a predetermined position of an underwater section of a hull shell plating to blow the pressured air to generate minute air bubbles. An auxiliary gas blowing unit is provided at a position on a bow side from the main gas blowing unit to generate air bubbles having a diameter larger than that generated by the main gas blowing unit.

Also, a frictional resistance reduction ship is disclosed in JP H11-321775A. The frictional resistance reduction ship is provided with an air bubble blowing opening for the frictional resistance reduction provided for the hull shell plating in the underwater and a compression gas source in a ship which is connected with the air bubble blowing opening. An air bubble diffusion prevention member for making the gas bubbles blown out from the gas bubbles blowing opening cover the hull shell plating is arranged in neighborhood of the air bubble blowing opening to have a gap to a hull shell plating.

JP H10-24891A discloses a ship with a hull and a frictional resistance reduction apparatus.

JP2000255477 discloses ship with a hull and a frictional reduction apparatus on which the preamble portion of claim 1 is based.

### Summary of the Invention

An object of the present invention is to provide a frictional resistance reduction ship, in which air can be uniformly blown into a direction from a bow section to a stern section or a ship width direction from air blowing holes formed in the direction from the bow section to the stern section in a bow side section.

This object of the present invention, and other objects and profits except them can be easily confirmed by a ship with the features of claim 1 according to the following description and the attached drawings.

The ship frictional resistance reduction apparatus in the ship of the present invention is provided with an air blowing chamber arranged in a hull; and an air supply pipe which supplies air into the air blowing chamber. The air is blown out through air blowing holes to outboard underwater from the air blowing chamber. The air blowing holes are formed in a direction from a bow section to a stern section in a ship side of a bow section of the hull. The air blowing chamber is provided with a front plate in which the air blowing holes are formed; and a back plate arranged to oppose to the front plate. The front plate is provided with an upper stage region; a middle stage region under the upper stage region; and a lower stage region under the middle stage region. The air blowing holes are preferably formed only in the upper stage region and the lower stage region.

The air supply pipe is connected with the air blowing chamber such that the air is blown down in an in-chamber space as a space of the air blowing chamber.

The air blowing chamber is provided with the front plate in which the air blowing holes are formed; the back plate arranged to oppose to the front plate; and a diffusion plate which partitions an in-chamber space into a first part on a side of the back plate and a second part on a side of the front plate. The air supply pipe is connected with the air blowing chamber such that the air is blown into the first part and the first part and the second part are connected below the diffusion plate but are not connected above the diffusion plate.

According to the above frictional resistance reduction ship, the air can be uniformly blown out into the direction from the bow section to the stern section or in a ship width direction from the air blowing holes formed in a direction from a bow section to a stern section.

### Brief Description of the Drawings

FIG. 1A is a ship bottom view schematically showing a ship introduced with a conventional resistance reduction technique;
FIG. 1B is a ship bottom view schematically showing of the ship which has a relatively small area of a flat ship bottom and is introduced with the resistance reduction technique shown FIG. 1A;
FIG. 2A are a side view showing a bow section of a hull provided with a conventional frictional resistance reduction apparatus;
FIG. 2B is a sectional view of the frictional resistance reduction apparatus along an A-A line in FIG. 2A;
FIG. 3A is a side view schematically showing a structure example of the frictional resistance reduction ship according to a first example serving to explain aspects of the present invention;
FIG. 3B is a bottom view schematically showing a structure example of the frictional resistance reduction ship according to the first example;
FIG. 4A is a sectional view schematically showing a structure example of a gas blowing section and a gas blowing chamber;
FIG. 4B is a sectional view schematically showing a structure example of the gas blowing section and the gas blowing chamber;
FIG. 5A is a diagram schematically showing a structure example of the gas blowing section;
FIG. 5B is a diagram schematically showing a structure example of the gas blowing section;
FIG. 5C is a diagram schematically showing a structure example of the gas blowing section;
FIG. 5D is a diagram schematically showing a structure example of the gas blowing section;
FIG. 5E is a diagram schematically showing structure example at the gas blowing section.
FIG. 5F is a diagram schematically showing a structure example of the gas blowing section;
FIG. 5G is a diagram schematically showing a structure example of the gas blowing section;
FIG. 5H is a diagram schematically showing a structure example of the gas blowing section;
FIG. 6 is a bottom view schematically showing a position of a ship bottom gas blowing section 11 and ship side gas blowing sections 12;
FIG. 7 is a bottom view schematically showing a structure example of the frictional resistance reduction ship according to a second example serving to explain aspects of the present invention;
FIG. 8 is a side view of a bow section of the ship provided with the frictional resistance reduction apparatus according to a third example serving to explain aspects of the present invention;
FIG. 9A is a perspective view showing the air blowing chamber of the frictional resistance reduction apparatus according to the third example;
FIG. 9B is a sectional view showing the air blowing chamber according to the third example along the line B-B shown in FIG. 9A;
FIG. 9C is a sectional view showing the air blowing chamber according to the third example along the line C-C shown in FIG. 9A;
FIG. 10 is a sectional view showing the air blowing chamber according to a comparison example;
FIG. 11 is a side view showing the bow section of the ship provided with the frictional resistance reduction apparatus according to a fourth example serving to explain aspects of the present invention;
FIG. 12 is a sectional view showing the air blowing chamber of the frictional resistance reduction apparatus according to the fourth example;
FIG. 13 is a sectional view showing the air blowing chamber of the frictional resistance reduction apparatus according to a fifth example serving to explain aspects of the present invention;
FIG. 14 is a sectional view of the air blowing chamber of the frictional resistance reduction apparatus according to a sixth example serving to explain aspects of the present invention;
FIG. 15 is a sectional view showing the air blowing chamber of the frictional resistance reduction apparatus according to a seventh example serving to explain aspects of the present invention;
FIG. 16 is a sectional view showing the air blowing chamber of the frictional resistance reduction apparatus according to an eighth example serving to explain aspects of the present invention;
FIG. 17 is a sectional view showing the air blowing chamber of the frictional resistance reduction apparatus according to a ninth example serving to explain aspects of the present invention;
FIG. 18 is a sectional view showing the air blowing chamber of the frictional resistance reduction apparatus according to a tenth example serving to explain aspects of the present invention;
FIG. 19 is a front view showing a bow section of a ship provided with the frictional resistance reduction apparatus according to the above examples;
FIG. 20 is a side view of the bow section of the ship provided with the frictional resistance reduction apparatus according to an eleventh example serving to explain aspects of the present invention;
FIG. 21A is a perspective view showing the air blowing chamber of the frictional resistance reduction apparatus according to the eleventh example;
FIG. 21B is a sectional view showing the air blowing chamber according to the eleventh example along the line B1-B1 in FIG. 21A;
FIG. 21C is a sectional view showing the air blowing chamber according to the eleventh example along the line C1-C1 in FIG. 21A;
FIG. 22A is a sectional view showing the air blowing chamber of the frictional resistance reduction apparatus according to a first embodiment of the present invention;
FIG. 22B is a sectional view showing the air blowing chamber according to the first embodiment along the line Dl-Dl in FIG. 22A;
FIG. 23 is a side view of the bow section of the ship provided with the frictional resistance reduction apparatus according to a second embodiment of the present invention;
FIG. 24 is a sectional view showing the air blowing chamber of the frictional resistance reduction apparatus according to the second embodiment;
FIG. 25 is a sectional view showing the air blowing chamber of the frictional resistance reduction apparatus according to a twelfth example serving to explain aspects of the present invention;
FIG. 26 is a sectional view showing the air blowing chamber of the frictional resistance reduction apparatus according to a third embodiment of the present invention;
FIG. 27 is a sectional view showing the air blowing chamber of the frictional resistance reduction apparatus according to a thirteenth example serving to explain aspects of the present invention;
FIG. 28 is a sectional view showing the air blowing chamber of the frictional resistance reduction apparatus according to a fourteenth example serving to explain aspects of the present invention; and
FIG. 29 is a front view showing the bow section of the ship provided with the frictional resistance reduction apparatus according to the above examples and embodiments.

### Description of Embodiments

Hereinafter, a frictional resistance reduction ship and a frictional resistance reduction apparatus of the ship according to examples serving to explain aspects of the invention and according to embodiments of the present invention will be described with reference to the attached drawings.

### [First Example]

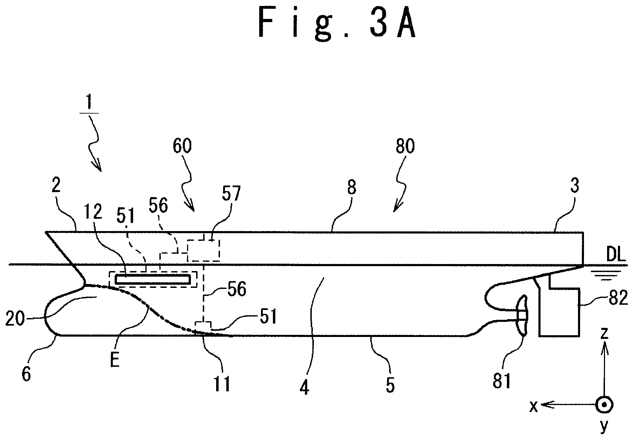

The structure of the frictional resistance reduction ship according to the first example serving to explain aspects of the present invention will be described. FIG. 3A is a side view schematically showing an example of the structure of the frictional resistance reduction ship according to the first example. In FIG. 3A, a longitudinal direction (a direction from the bow to the stern) of the hull 80 of frictional resistance reduction ship 1, a width direction (a direction from the left to the right) of the hull 80, and a direction orthogonal to these directions are shown as a direction of x, a direction of y, and a direction of z, respectively. A line on the water surface of the hull 80 which floats on the still water surface, is a draft line DL. At that time, the streamlines in a bow section 2 are almost as shown by E.

The frictional resistance reduction ship 1 is a ship which has a flat ship bottom of a small area and which sails in sea and river. Such a ship is referred to as a slender type of ship, which has a relatively small block coefficient Cb (approximate value of Cb: 0.50 - 0.75). As the ships having such a block coefficient Cb, a ferry, a passenger ship, a container carrier, and an LNG ship are exemplified. The frictional resistance reduction ship 1 is composed of the hull 80 and a gas blowing unit 60 provided in the hull 80. The hull 80 is composed of a bow section 2 which contains a front section 6, a middle (midship) section 8, a stern section 3, a propeller screw 81 and a rudder 82. Here, the hull 80 is divided into the three sections in a direction of the hull center line C, and these sections are set as the bow section 2 on the bow side, the stern section 3 on the stern side, and the middle (midship) section 3 between them.

The gas blowing unit 60 blows out a gas (e.g. air and exhausted gas from a main engine and so on) into underwater from gas blowing sections provided for two sides of the ship and a bottom 5 of the ship in the bow section 2 to cover the ship bottom 5 and the ship sides 4 of the hull 80 with air bubbles in sailing. The gas blowing unit 60 is composed of a ship bottom gas blowing section 11, ship side gas blowing sections 12, and a gas supply section 57, and gas blowing chambers 51. The ship side gas blowing section 12 is provided for the hull shell plating 20 of the ship side 4 in the bow section 2 to be possible to blow air into the underwater. The ship bottom gas blowing section 11 is provided for the shell plating 20 of the ship bottom 5 in the bow section 2 to be possible to blow air into the underwater. The gas supply section 57 is provided with a compressor or a blower. The gas supply section 57 supplies gas to the gas blowing chambers 51 provided for the ship bottom gas blowing section 11, and the ship side gas blowing sections 12 through pipes 56. The gas blowing chamber 51 is provided for each of the gas blowing sections 11 and 12. The gas supplied through the pipe 56 is blown out from each of the gas blowing sections 11 and 12 of the gas blowing chambers 51 into the underwater.

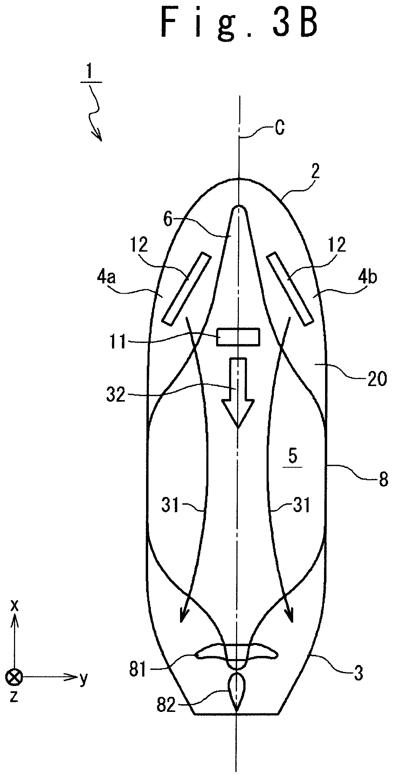

FIG. 3B is a bottom view schematically showing a structural example of the frictional resistance reduction ship according to the first example. The direction of x, the direction of y and the direction of z are the same as FIG. 3A. A centerline in the longitudinal direction of the hull 80 is shown as a centerline C. The propeller screw 81 and the rudder 82 are provided for the stern section 3 on the hull centerline C.

The ship side gas blowing section 12 is provided for both of the starboard and port sides. The ship side gas blowing section 12 on the starboard side (the side of -y) is provided for the shell plating 20 on the starboard side 4a in the bow section 2 and can blow out the air into the underwater on the starboard side 4a. The ship side gas blowing section 12 on the port side (the side of +y) is provided for the shell plating 20 on the port side 4b in the bow section 2 and can blow out the air into the underwater on the port side 4b. It is desirable to provide the ship side gas blowing section 12 on the starboard side and the ship side gas blowing section 12 on the port side such that they are symmetrical with respect to the hull centerline C. This is because the frictional resistance reduction effect of the hull 80 is the same between both of the sides so that the rudder control becomes easy.

The ship bottom gas blowing section 11 is provided onto the hull centerline C or in the neighborhood of the hull centerline C. When the ship bottom gas blowing section 11 is one (in case of FIG. 3B), it is desirable to have the shape in which portions of the ship bottom gas blowing section 11 are symmetrical with respect to the hull centerline C. On the other hand, when the number of ship bottom gas blowing sections 11 is two or more, it is desirable that the ship bottom gas blowing sections 11 are arranged to be symmetrical with respect to the hull centerline C. For example, the ship bottom gas blowing sections 11 are arranged to be symmetrical with respect to the hull centerline C when the number of the blowing sections 11 is even. When the number of the blowing sections 11 is odd, one ship bottom gas blowing section 11 is arranged on the hull centerline C and the remaining ship bottom gas blowing sections 11 are arranged to be symmetrical with respect to the hull centerline C. It should be noted that all the ship bottom gas blowing sections 11 may be arranged on the hull centerline C. It is because the frictional resistance reduction effect of the hull 80 becomes the same in both sides in either case, and the rudder control becomes easy.

Also, the gas bubbles generated from the gas which is blown out into the underwater from the ship side gas blowing sections 12, flow along streamlines as shown by arrows 31. By the gas bubbles, it becomes possible to cover the ship sides 4 and the ship bottom 5 in the bow section 2 although it was difficult conventionally. Thus, it is possible to increase the surface area of the hull 80 which is covered with the gas bubbles so that the resistance reduction effect can be improved.

It is desirable that an almost portion of the ship side 4 and the ship bottom 5 is covered with the air bubbles from the ship side gas blowing sections 12 and the remaining portion thereof is covered with the air bubbles from the ship bottom gas blowing section 11. This is because the ship side gas blowing sections 12 are provided in a shallower position in the water depth than the ship bottom gas blowing section 11 so that the energy required to blow out the gas to the outboard underwater of the hull 80 is smaller. Therefore, it is desirable that a blown gas quantity (a generation quantity of air bubbles) from the ship side gas blowing sections 12 on both sides is more than that of the ship bottom gas blowing section 11. Moreover, it is desirable that the blown gas quantity of one ship side gas blowing section 12 is more than that of the ship bottom gas blowing section 11. Thus, the energy saving effect can be improved.

Also, the air bubbles which are blown out into the underwater from the ship bottom gas blowing section 11 flow according to the streamlines into the direction of the stern section 3 along the hull centerline C as shown by an arrow 32. The phenomenon that a density of the air bubbles becomes low into the longitudinal direction in the center portion of the ship bottom 5 can be avoided by the air bubbles blown out from the ship bottom gas blowing section 11. As a result, the ship sides 4 and the ship bottom 5 are covered with the air bubbles and the frictional resistance of the hull 80 is more reduced.

It should be noted that the frictional resistance reduction ship 1 has the two ship side gas blowing sections 12 on the ship sides 4 and the ship bottom gas blowing section 11 of the ship bottom 5 in the bow section 2 in the above description with reference to FIG. 3A and FIG. 3B. However, the present invention is not limited to the above examples. The frictional resistance reduction ship 1 may further have a gas blowing section 11 or 12, and may have a plurality of sets of the ship side gas blowing sections 12 or the ship bottom gas flowing sections 11.

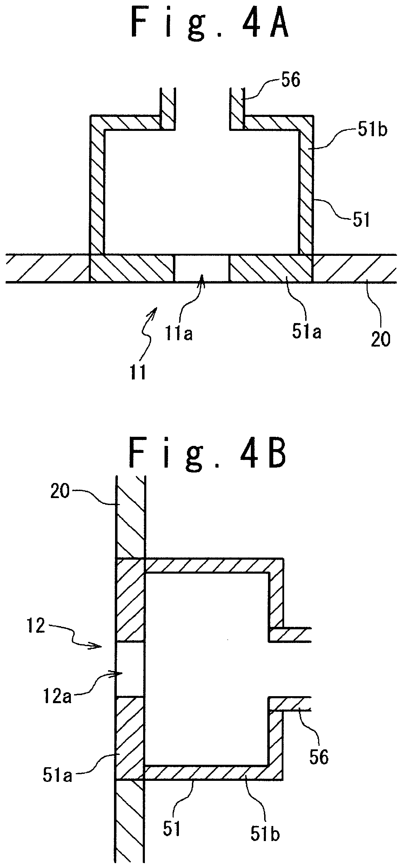

Next, a relation of the ship bottom gas blowing section 11 and the ship side gas blowing section 12 to the gas blowing chambers 51 will be further described. FIG. 4A is a sectional view schematically showing a structure example of the ship bottom gas blowing section 11 and the gas blowing chamber 51. The gas blowing chamber 51 is coupled with the shell plating 20 of the ship bottom 5 in the hull 80. The gas blowing chamber 51 is supplied with gas through the pipe 56. The gas is diffused into an internal space 52 of the gas blowing chamber 51 and the gas is blown out from a gas blowing hole 11a of the ship bottom gas blowing section 11 provided for the bottom plate 51a. The bottom plate 51a of the gas blowing chamber 51 may be identical with the shell plating 20 of the ship bottom 5 (in case of FIG. 4A). In this case, an outer frame 51b of the gas blowing chamber 51 is coupled with the shell plating 20. Or, the bottom plate 51a of the gas blowing chamber 51 may overlap with the shell plating 20 of the ship bottom 5 (not shown). In this case, the outer frame 51b of the gas blowing chamber 51 and the bottom plate 51a are coupled with the shell plating 20. Or, the bottom plate 51a of the gas blowing chamber 51 may be separated from the shell plating 20 of the ship bottom 5 (not shown). In this case, the bottom plate 51a of the gas blowing chamber 51 is coupled with the shell plating 20 through pipes and so on (not shown).

FIG. 4B is a sectional view schematically showing a structure example of the ship side gas blowing section 12 and the gas blowing chamber 51. It should be noted that because the ship side gas blowing sections 12 on the starboard side 4a and the port side 4b are the same, only one of the sides (the port side 4b) will be described. The gas blowing chamber 51 is coupled with the hull shell plating 20 of the ship side 4. The gas blowing chamber 51 is supplied with gas through the pipe 56. The gas is diffused in the whole internal space 52 of the gas blowing chamber 51 and the gas is blown out from a gas blowing hole 12a of the ship side gas blowing section 12 provided for the bottom plate 51a. The bottom plate 51a of the gas blowing chamber 51 may be identical to the shell plating 20 of the ship side 4 (in case of FIG. 4B). In this case, the outer frame 51b of the gas blowing chamber 51 is coupled with the shell plating 20. Or, the bottom plate 51a of the gas blowing chamber 51 may overlap with the shell plating 20 of the ship side 4 (not shown). In this case, the outer frame 51b of the gas blowing chamber 51 and the bottom plate 51a are coupled with the shell plating 20. Or, the bottom plate 51a of the gas blowing chamber 51 may be separated from the shell plating 20 of the ship side 4 (not shown). In this case, the bottom plate 51a of the gas blowing chamber 51 is coupled with the shell plating 20 through the pipe 56 and so on (not shown).

Next, the ship side gas blowing section 12 will be described. It should be noted that because the ship side gas blowing sections 12 on the starboard side 4a and the port side 4b are the same, only one of the sides (the port side 4b) will be described. The ship side gas blowing section 12 is provided with one or a plurality of gas blowing holes 12a. The ship side gas blowing section 12 is formed to have a band shape (rectangular shape) which extends in parallel to the draft line DL on the port side 4b in the bow section 2. The ship side gas blowing section 12 is provided for the underside from the draft line DL in case of a light draft. The band shape corresponds to the shape of a coupling portion of the outer frame 51b and the shell plating 20 when the gas blowing chamber 51 is coupled with the shell plating 20 inside the shell plating 20. When the coupling portion of the outer frame 51b and the shell plating 20 has another shape (e.g. circle, ellipse, or polygon), the other shape may be adopted as the shape of the ship side gas blowing section 12. Also, when there is another gas blowing chamber having a same distance (a same water depth) to the draft line DL in the neighborhood of the gas blowing chamber 51, these chambers can be regarded as the single ship side gas blowing section 12 because the other gas blowing chamber attains the same function as the gas blowing chamber 51. However, the neighborhood of the gas blowing chamber 51 means the periphery of the gas blowing chamber 51 and a range of the longest side, the maximum diameter and the longer axis of the gas blowing chamber 51.

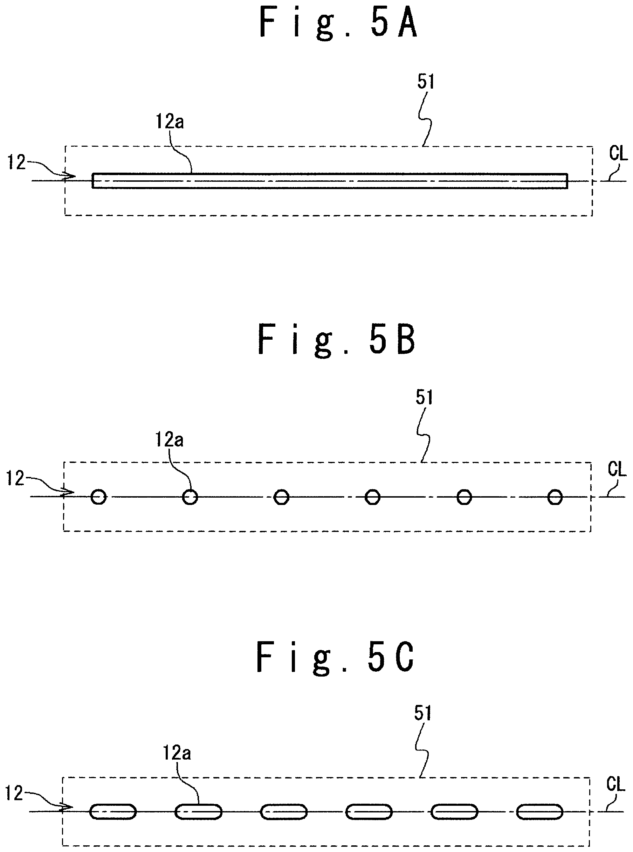

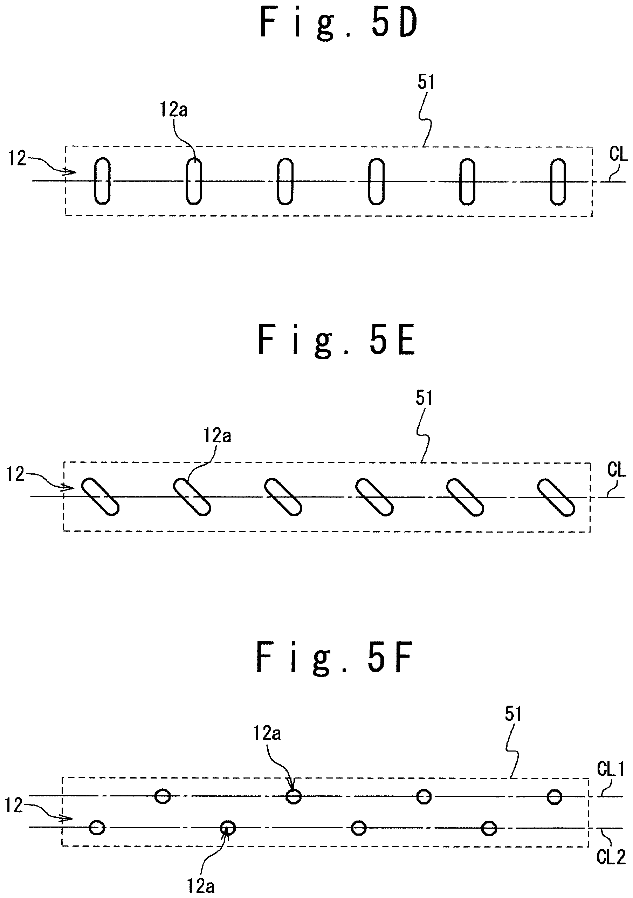

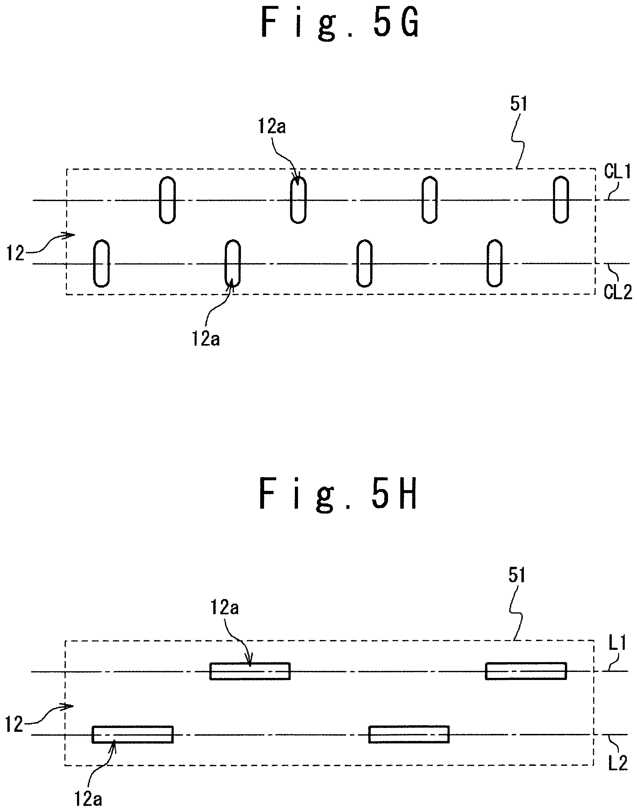

FIG. 5A to FIG. 5H are diagrams schematically showing structure examples of the ship side gas blowing section 12. In case of the ship side gas blowing section 12 shown in FIG. 5A, the gas blowing hole 12a has a slit shape. The slit shape is a rectangular shape extending into a direction CL parallel to the draft line DL on the port side 4b. The ship side gas blowing section 12 may be provided with a plurality of gas blowing holes 12a in the direction. In case of the ship side gas blowing section 12 shown in FIG. 5B, the gas blowing holes 12a has a circular shape. The ship side gas blowing section 12 is provided with a plurality of gas blowing holes 12a into the direction CL. In case of the ship side gas blowing section 12 shown in FIG. 5C, the circular shape of the gas blowing hole 12a is replaced by an elliptical shape or an oval shape, and the ship side gas blowing section 12 shown in FIG. 5C is same as the ship side gas blowing section 12 shown in FIG. 5B except for the replaced point. However, the longer axis is parallel to the direction CL. The ship side gas blowing section 12 shown in FIG. 5D is the same as the ship side gas blowing section 12 shown in FIG. 5C, except that the shorter axis of the elliptical shape or the oval shape of the gas blowing holes 12a is parallel to the direction CL. The ship side gas blowing section 12 shown in FIG. 5E is the same as the ship side gas blowing section 12 shown in FIG. 5C except that the longer axis of the elliptical shape or the oval shape of the gas blowing hole 12a is inclined (e.g. parallel to the direction of the planed streamline). In case of the ship side gas blowing section 12 shown in FIG. 5F, the gas blowing holes 12a have a circular shape. The ship side gas blowing section 12 is provided with the gas blowing holes 12a arranged along the two straight lines CL1 and CL2 parallel to the direction CL. The gas blowing holes 12a on the straight line CL1 are shifted from the gas blowing holes 12a on the straight line CL2 in the direction CL. The ship side gas blowing section 12 shown in FIG. 5G is the same as the ship side gas blowing section 12 shown in FIG. 5F except that the circular shape the gas blowing holes 12a in FIG. 5F is replaced by an elliptical shape or an oval shape. The longer axis of each elliptical shape or the oval shape is perpendicular to straight lines CL1 and CL2. The ship side gas blowing section 12 shown in FIG. 5H is the same as the ship side gas blowing section 12 shown in FIG. 5F except that the circular shape of the gas blowing hole 12a is replaced by a slit. The longitudinal direction of each slit is parallel to straight lines CL1 and CL2.

The reason why the plurality of gas blowing holes 12a are arranged along the direction parallel to the draft line DL in FIG. 5A to FIG. 5H is to set the water depths to a same depth among the plurality of gas blowing holes 12a. By setting the water depth to the same depth, the influence of the water pressure can be equalized over the plurality of gas blowing holes 12a. As a result, the plurality of gas blowing holes 12a can blow out the gas of a same quantity and can keep the coverage of the hull 80 by the air bubbles stably. However, the plurality of gas blowing holes 12a are arranged on the two lines in FIG. 5F to FIG. 5H. In this case, it can be assumed that the water pressure is constant every column.

It should be noted that as previously mentioned, the gas blowing chamber 51 is provided inside the hull 80 of the ship side gas blowing section 12 in FIG. 5A to FIG. 5H. However, the gas blowing chamber 51 may be provided every gas blowing hole 12a and may be provided for the plurality of gas blowing holes 12a. At this time, the plurality of gas blowing holes 12a are arranged in the same distance (the same water depth) to the draft line DL, and they are provided in neighborhood to each other. That is, they are closely arranged in the range of the longest side, the maximum diameter and the longer axis of the shape of the gas blowing chamber 51.

The ship bottom gas blowing section 11 is provided with one or a plurality of gas blowing holes 11a. For example, the ship bottom gas blowing section 11 is formed to have a band shape (a rectangular shape) extending substantially perpendicularly to the hull centerline C in the ship bottom 5 of the bow section 2. The band shape corresponds to a shape of the coupling portion of the outer frame 51b and the shell plating 20 when the gas blowing chamber 51 is coupled with the shell plating 20 inside the shell plating 20. When the coupling portion of the outer frame 51b and the shell plating 20 has another shape (e.g. circle, ellipse, polygon), the shape may be adopted as the shape of the ship bottom gas blowing section 11. Also, because it could be considered that almost the same function are attained even when there is another gas blowing chamber 51 in the neighborhood of the gas blowing chamber 51, they can be regarded as one ship bottom gas blowing section 11 as a whole. The neighborhood of the gas blowing chamber 51 is a periphery of the gas blowing chamber 51 and in a range of the longest side, the maximum diameter and the longest axis of the shape of the gas blowing chamber 51.

The structure of the ship bottom gas blowing section 11 and the gas blowing holes 11a may be basically the same as that of the ship side gas blowing section 12 and the gas blowing holes 12a (FIG. 5A to FIG. 5H). Or, the structure conventionally provided for the bottom of the hull may be used. Also, in this case, a gas blowing chamber 51 may be provided every gas blowing hole 11a and may be provided every gas blowing holes 11a. At this time, the plurality of gas blowing holes 11a are provided to be close to each other. That is, the plurality of gas blowing holes 11a are close to each other in a range of the longest side, the maximum diameter and the loner axis of the shape of the gas blowing chamber 51.

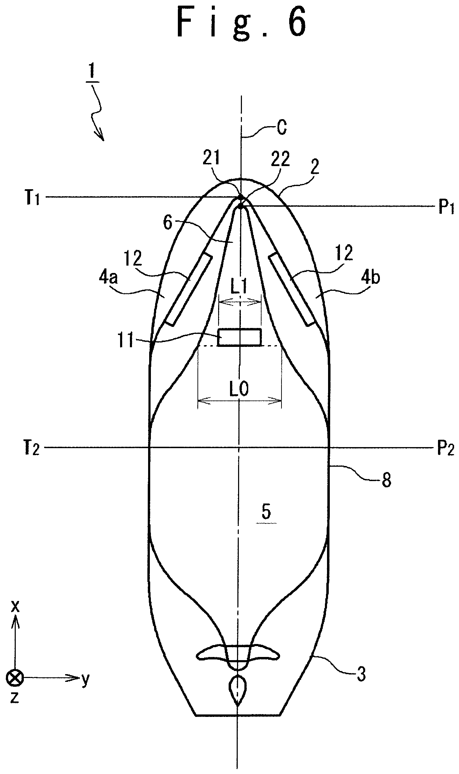

Next, the positions of the ship bottom gas blowing section 11 and the ship side gas blowing section 12 will be described. FIG. 6 is a bottom view schematically showing the positions of the ship bottom gas blowing section 11 and the ship side gas blowing section 12.

It is desirable that the ship bottom gas blowing section 11 is provided in a range from a first position P1 to a second position P2 in the direction of the hull centerline C. However, the first position P1 is a leading end 22 in the bottom surface 5 in the front section 6 of the bow section 2. The second position P2 is a position of the ship bottom 5 in a midship section.

It is desirable that the ship bottom gas blowing section 11 is provided in a position to the front side (+ x side) on the bottom surface 5, from the viewpoint to cover the front section 6 of the bow section 2, which is not covered with the air bubbles from the ship side gas blowing sections 12, with the air bubbles as much as possible. For this reason, the position on the front side (+ x side) is set to the first position P1. Also, it is desirable to provide the ship bottom gas blowing section 11 in a position not close to the stern side (-x side) on the bottom surface 5 from the viewpoint to supply the air bubbles to a portion where a density of the air bubbles is low on the central portion (near the centerline C) of the ship bottom 5. For this reason, a position on the stern side (-x side) is set to the second position P2. From the above reasons, it is desirable that the ship bottom gas blowing section 11 is provided in a range from the first position P1 to the second position P2.

Moreover, it is desirable that the length L1 of the ship bottom gas blowing section 11 in the width direction (y direction) is greater than a first width and equal to or less than a second width. However, because there is no special limitation if the ship bottom gas blowing section 11 can blow gas, the first width is zero. The second width is the length L0 in the width direction (the y direction) of the flat portion of the ship bottom 5 in the arrangement portion of the ship bottom gas blowing section 11 in the direction of the hull centerline C (the x direction). It should be noted that the flat portion may have a ship bottom inclination.

It is desirable to provide the ship bottom gas blowing section 11 so as to have a wider width in the width direction (the y direction) in the bottom surface 5. Therefore, if the above length in the width direction (the y direction) of the flat portion of the ship bottom 5 is L0, this value is the longest length. Also, because the ship bottom gas blowing section 11 can attain its function if it is possible to blow the gas, it is enough that the ship bottom gas blowing section 11 has the size by which the gas can be blown out and which is larger than zero. For example, it may be one small hole (e.g. a circular hole of 1-mm diameter and a rectangular hole of 1-mm square). From the above reasons, it is desirable that the ship bottom gas blowing section 11 is provided to be larger than the first width (0) and equal to or less than the second width (L0).

Also, it is desirable that the ship side gas blowing sections 12 on the starboard side and at the port side are provided in a range from a third position T1 to a fourth position T2 in the direction of the hull centerline C (the x direction). However, the third position T1 is a position of a leading end 21 of the front section 6 of the bow section 2 in a height (water depth) of the ship side gas blowing section 12. At this time, the ship side gas blowing sections 12 on the starboard side and the port side are coupled in the leading end 21 to form a V-shaped type ship side gas blowing section. This type is desirable in that the ship bottom 5 of a very wide area can be covered with the air bubbles from the bow section 2. The fourth position T2 is a position in the ship sides 4 (on the starboard side 4a and the port side 4b) in the midship section.

It is desirable that the ship side gas blowing section 12 is provided at a position closer to a leading end of the ship side 4 (the +x side), from the viewpoint to cover a wider area of the ship bottom 5 with the air bubbles from the bow section 2. Therefore, the position of the leading end (the +x side) is set as the third position T1. Also, from the viewpoint to prevent generation of a portion of the ship bottom 5 which cannot be covered with the air bubbles, it is desirable to provide the ship side gas blowing section 12 in a position which is not too close to the stern side (-x side) of the ship side 4. Therefore, a position on the stern side (-x side) is set as a fourth position T2. It is desirable to provide the ship side gas blowing section 12 in a range between the third position T1 and the fourth position T2 from above reasons.

By adopting such a structure, the ship bottom can be covered with the air bubbles more efficiently and more effectively, and a deviation in a blown air quantity of air depending on the position of the holes of the air blowing section can be reduced, and as a result, the frictional resistance reduction effect can be sufficiently shown.

As described above, in the present example, because the ship side gas blowing sections 12 are provided on both ship sides and the ship bottom gas blowing section 11 is provided on the central portion of the ship bottom, the ship sides and the ship bottom can be sufficiently covered with the air bubbles blown from the blowing sections, although it was conventionally difficult. Moreover, it is possible to prevent the phenomenon that the air bubble density becomes low in the longitudinal direction in the central portion of the ship bottom. Thus, the frictional resistance can be further reduced. Also, because the ship side gas blowing section 12 is provided in a shallow position of water depth, the energy required to blow out the gas to the outside of the hull 80 is smaller so as to be able to attain energy saving. Moreover, because the ship side gas blowing section 12 is provided in almost parallel to the draft line, the deviation of the blown gas quantity depending on the position of the holes of a ship side air blowing section can be reduced.

### [Second Example]

The structure of the frictional resistance reduction ship according to a second example serving to explain aspects of the present invention will be described.

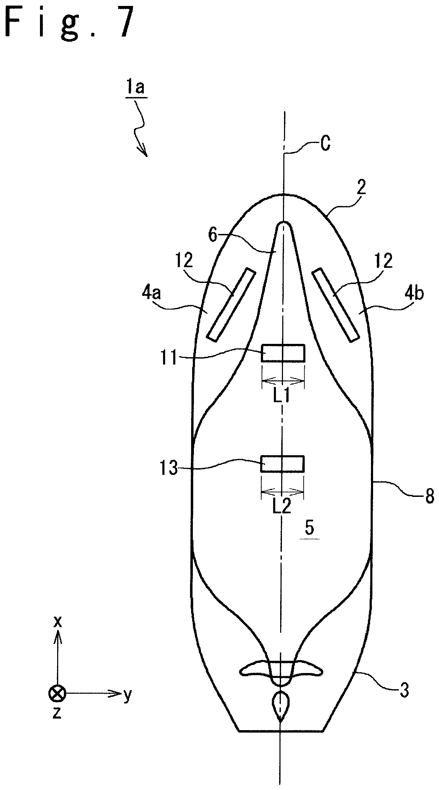

FIG. 7 is a bottom view schematically showing a structure example of the frictional resistance reduction ship according to the second example. The frictional resistance reduction ship 1a of the present example is different from the frictional resistance reduction ship 1 (FIG. 3A and FIG. 3B) in the first example in the point that another ship bottom gas blowing section 13 is provided on the ship bottom 5. Below, the points different from the first example will be mainly described.

The ship bottom gas blowing section 13 is provided into a rear direction from the ship bottom gas blowing section 11 (on the side of the stern section 3; - x side) on the shell plating 20 of the ship bottom 5 on the hull centerline C or in the neighborhood of the hull centerline C. The ship bottom gas blowing section 13 can blow out the air supplied from the gas blowing unit 60 through the pipe 56 and the gas blowing chamber 51. The structure of the ship bottom gas blowing section 13, e.g. the shape, the number and the arrangement of components, the shape, the number and the arrangement of the gas blowing holes 13a are similar to those of the ship bottom gas blowing section 11 (the gas blowing holes 11a) in the first example.

It should be noted that it is desirable that the blown air quantity of the gas (a generation quantity of air bubbles) of the ship side gas blowing sections 12 on both the sides is more than a blown air quantity of the ship bottom gas blowing section 11 or 13. Moreover, it is further desirable that the blown air quantity of one ship side gas blowing section 12 is more than the blown air quantity of each of the ship bottom gas blowing sections 11 and 13, and more than a total of the air quantities of the ship bottom gas blowing sections 11 and 13. Thus, the energy saving effect can be improved.

In the present example, the same effect as the first example can be attained. Also, in addition, with air bubbles from the ship bottom gas blowing section 13, it is possible to surely prevent the phenomenon that the air bubble density becomes low in the longitudinal direction in the central portion of the ship bottom 5.

### [Third Example]

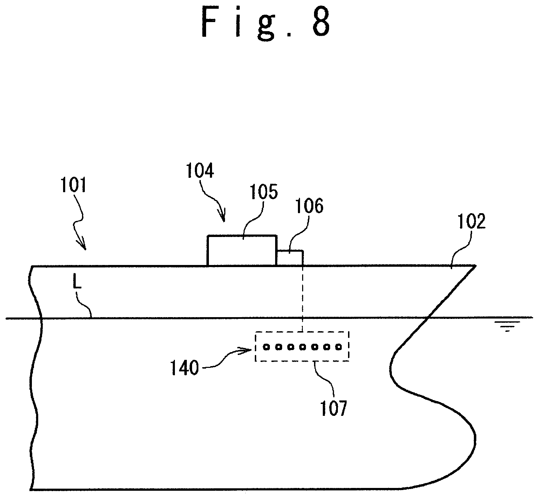

Referring to FIG. 8, the ship according to a third example serving to explain aspects of the present invention is provided with a hull 101 and a frictional resistance reduction unit 104. The frictional resistance reduction unit 104 is provided with an air supply section 105 such as a blower and a compressor, an air supply pipe 106 and an air blowing chamber 107. The air blowing chamber 107 is arranged in a position lower than a draft line L in the hull 101. The air supply pipe 106 supplies air from the air supply section 105 to the air blowing chamber 107. The air is blown out from a plurality of air blowing holes 140 formed along the direction from the bow section of a ship section 102 to the stern section thereof in the hull 101, into the outboard underwater by the air blowing chamber 107. The air blown out from the plurality of air blowing holes 140 covers the surface of the hull 101. The frictional resistance of the hull 101 can be reduced.

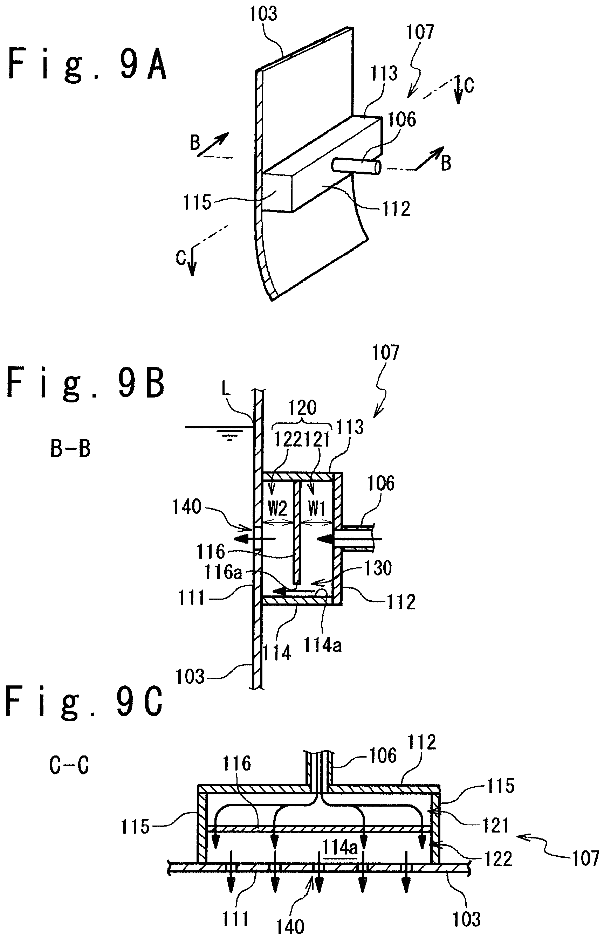

Referring to FIG. 9A, the air blowing chamber 107 is formed to have a box-type structure which does not have a portion protruding from a hull shell plating 103 to underwater. The air blowing chamber 107 is provided with a back plate 112, a ceiling plate 113 and side plates 115. The side plate 115 is arranged in the both ends in the longitudinal direction of the air blowing chamber 107, i.e. the both ends of the air blowing chamber 107 in the direction from the bow section to the stern section. The air supply pipe 106 is connected with the back plate 112.

Referring to FIG. 9B, the air blowing chamber 107 is provided with a front plate 111 as a part of the hull shell plating 103, a bottom plate 114 and a diffusion plate 116. The plurality of air blowing holes 140 are formed in the front plate 111. The back plate 112 is arranged to oppose to the front plate 111. That is, the back plate 112 is arranged to oppose to the front plate 11 while putting an in-chamber space 120 as a space of the air blowing chamber 107. The ceiling plate 113 and the bottom plate 114 are arranged to put the in-chamber space 120 between them. The ceiling plate 113 is nearer the draft line L than the bottom plate 114. The diffusion plate 116 partitions the in-chamber space 120 into a first part 121 on the side of the back plate 112 and a second part 122 on the side of the front plate 111. The interval between the diffusion plate 116 and the back plate 112 is shown by W1 and the interval between the diffusion plate 116 and the front plate 111 is shown by W2. The air supply pipe 106 is connected with the back plate 112 such that the air is blown into the first part 121 from a lateral direction. The air supply pipe 106 blows out the air to the diffusion plate 116. The bottom plate 114 forms a bottom surface 114a of the air blowing chamber 107. A thin slit hole 130 is formed in the direction from the bow section to the stern section (in a longitudinal direction of the air blowing chamber 107) between a lower end portion 116a of the diffusion plate 116 and the bottom surface 114a. The first part 121 and the second part 122 are connected by the slit hole 130 below the diffusion plate 116 but are not connected above the diffusion plate 116. The first part 121 and the second part 122 are connected only below the diffusion plate 116. The position where the air supply pipe 106 is connected with the back plate 112 is above the position of the slit hole 130.

Referring to FIG. 9C, the air blown out from the air supply pipe 106 toward the diffusion plate 116 hits against the diffusion plate 116 and diffuses into a direction from the bow section to the stern section (the longitudinal direction of the air blowing chamber 107) in the first part 121 of the in-chamber space 120. Then, the air flows into the second part 122 of the in-chamber space 120 through the slit hole 130 provided under the diffusion plate 116 and is blown out from the plurality of air blowing holes 140 to the outboard underwater.

According to the present example, because the air blowing chamber 107 is arranged in the hull 101, the frictional resistance reduction unit 104 does not have any portion to protrude from the hull 101 to the underwater. Moreover, because the air is blown from the air supply pipe 106 for the diffusion plate 116, the air hits against the diffusion plate 116 and is diffused in the first part 121 of the in-chamber space 120 into a direction from the bow section to the stern section (the longitudinal direction of the air blowing chamber 107) and then is blown out to the outboard underwater. Therefore, the air can be uniformly blown out from the plurality of air blowing holes 140 formed along the direction from the bow section to the stern section.

Moreover, because the first part 121 connected with the air supply pipe 106 and the second part 122 connected with the outboard underwater through the air blowing holes 140 are connected below the diffusion plate 116 and are not connected above the diffusion plate 116, it can be prevented that the water entering from the outboard region into the in-chamber space 120 invades the air supply pipe 106, as far as it continues to supply the air from the air supply pipe 106 to the first part 121. Because water does not enter the air supply pipe 106, the rust of the air supply pipe 106 is prevented.

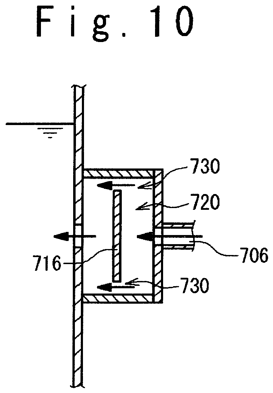

On the other hand, when a slit hole 730 is formed above and below a diffusion plate 716 as shown in FIG. 10, there is a fear that the water entering from the outboard region to the in-chamber space 720 invades the air supply pipe 706, even if the air continues to be supplied from the air supply pipe 706 to the in-chamber space 720.

Moreover, by making the interval W1 between the diffusion plate 116 and the back plate 112 wider than the interval W2 between the diffusion plate 116 and the front plate 111, the air diffusion in the direction from the bow section to the stern section (the longitudinal direction of the air blowing chamber 107) in the first part 121 of the in-chamber space 120 and the air blowing from the plurality of air blowing holes 140 are made more stabilized.

### [Fourth Example]

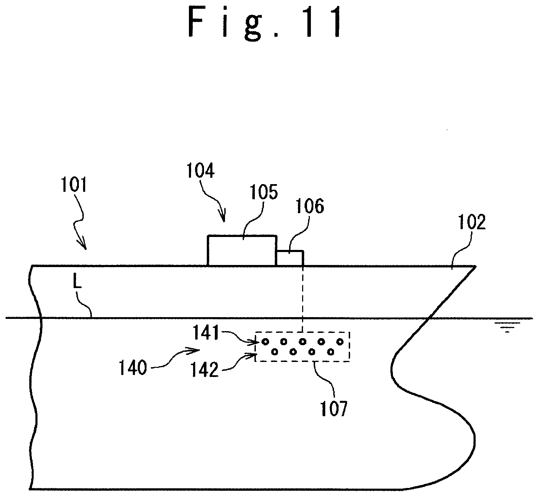

Referring to FIG. 11, the frictional resistance reduction unit 104 according to a fourth example serving to explain aspects of the present invention will be described. The frictional resistance reduction unit 104 according to the fourth example is provided like the frictional resistance reduction unit 104 according to the third example except for the following description. That is, the air blowing holes 140 of the frictional resistance reduction unit 104 according to the fourth example contains a plurality of upper stage air blowing holes 141 and a plurality of lower stage air blowing holes 142 which are lower than the plurality of upper stage air blowing holes 141.

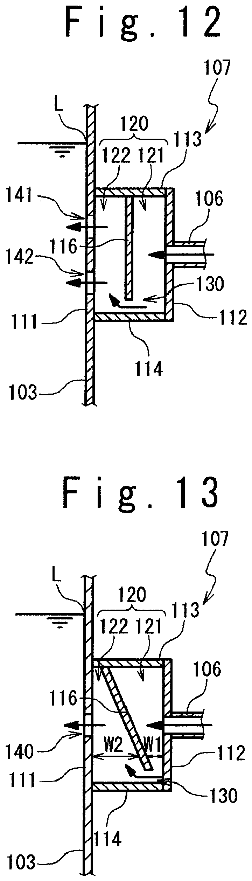

Referring to FIG. 12, the air is blown into the first part 121 from the air supply pipe 106, hits against the diffusion plate 116, diffuses in the first part 121 of the in-chamber space 120 in the direction from the bow section to the stern section (the longitudinal direction of the air blowing chamber 107), flows into the second part 122 of the in-chamber space 120 through the slit hole 130 provided below the diffusion plate 116 and is blown out from the plurality of air blowing holes 141 and 142 to the outboard underwater.

The present example has the effect that the outboard water pressure in the position of the lower stage air blowing holes 142 is high, compared with the outboard water pressure in the position of the upper stage air blowing holes 141, so that the lack of a flow amount of the air blown out from the lower stage air blowing holes 142 is suppressed, in addition to the effect of the third example.

It should be noted that it is desirable that the plurality of upper stage air blowing holes 141 and the plurality of lower stage air blowing holes 142 are arranged to be shifted from each other in the direction from the bow section to the stern section. By such an arrangement, the strength of the front plate 111 in which the plurality of upper stage air blowing holes 141 and the plurality of lower stage air blowing holes 142 are formed can be increased, compared with a case that the positions of the plurality of upper section air blowing holes 141 and the positions of the plurality of lower stage air blowing holes 142 in the direction from the bow section to the stern section are the same.

### [Fifth Example]

Referring to FIG. 13, the frictional resistance reduction unit 104 according to a fifth example serving to explain aspects of the present invention will be described. The frictional resistance reduction unit 104 according to the fifth example is similar to the frictional resistance reduction unit 104 according to the third example except for the following description. The diffusion plate 116 of the frictional resistance reduction unit 104 according to the fifth example is diagonally provided, such that in a lower position of the diffusion plate 116, the interval W1 between the diffusion plate 116 and the back plate 112 becomes wider, and the interval W2 between the diffusion plate 116 and the front plate 111 becomes narrower.

According to the present example, the interval W1 between the diffusion plate 116 and the back plate 112 becomes narrower in the lower position of the diffusion plate 11. Therefore, the first part 121 of the in-chamber space 120 becomes wider at a position farther from the slit hole 130. Thus, the diffusion of the air in the direction from the bow section to the stern section (the longitudinal direction of the air blowing chamber 107) in the first part 121 is more stabilized.

### [Sixth Example]

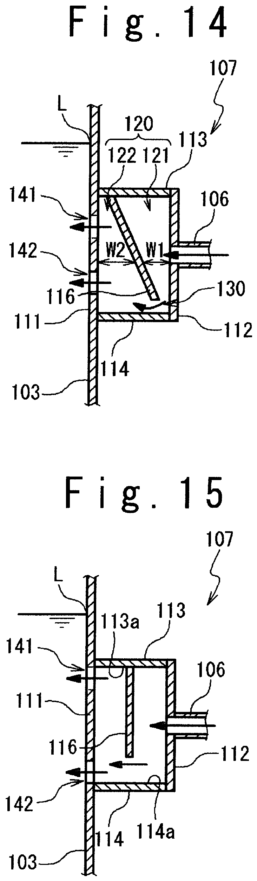

Referring to FIG. 14, the frictional resistance reduction unit 104 according to a sixth example serving to explain aspects of the present invention will be described. The frictional resistance reduction unit 104 according to the sixth example is similar to the frictional resistance reduction unit 104 according to the fourth example except for the following description. The diffusion plate 116 of the frictional resistance reduction unit 104 according to the sixth example is diagonally provided, such that in the lower position of the diffusion plate 116, the interval W2 between the diffusion plate 116 and the front plate 111 becomes wider and the interval W1 between the diffusion plate 116 and the back plate 112 becomes narrower.

According to the present example, the interval W1 between the diffusion plate 116 and the back plate 112 becomes narrower in the lower position of the diffusion plate 116. Therefore, the first part 121 of the in-chamber space 120 becomes wider at the position farther from the slit hole 130. Thus, the diffusion of the air in the direction from the bow section to the stern section (the longitudinal direction of the air blowing chamber 107) in the first part 121 can be stabilized.

According to the present example, because the interval W2 between the diffusion plate 116 and the front plate 111 becomes wider in the lower position of the diffusion plate 116, the second part 122 of the in-chamber space 120 is wide at the position of the plurality of lower stage air blowing holes 142 and is narrower at the position of the plurality of upper stage air blowing holes 141. Therefore, lack of a flow quantity of the air which is blown out from the air blowing holes 142 is further suppressed, because the outboard water pressure at the position of the air blowing holes 142 is high, compared with the outboard water pressure at the position of the upper stage air blowing holes 141 is more restrained.

### [Seventh Example]

Referring to FIG. 15, the frictional resistance reduction unit 104 according to the seventh example serving to explain aspects of the present invention will be described. The frictional resistance reduction unit 104 according to the seventh example is composed in the same way as the frictional resistance reduction unit 104 according to the fourth example except for the following description. In the air blowing chamber 107 of the frictional resistance reduction unit 104 according to the seventh example, a bottom plate 114 forms a bottom plane 114a of the air blowing chamber 107 and the ceiling plate 113 forms a ceiling plane 113a of the air blowing chamber 107. The plurality of air blowing holes 141 are arranged in a position as upper as possible of the air blowing chamber 107 and the plurality of air blowing holes 142 are arranged in a position as lower as possible of the air blowing chamber 107. For example, the plurality of air blowing holes 141 are arranged at the height of the ceiling plane 113a and the plurality of air blowing holes 142 are arranged at the height of the bottom plane 114a.

According to the present example, there is an effect that the air can be efficiently blown out from the plurality of air blowing holes 141 and 142 so as not to leave water in the air blowing chamber 107, in addition to the effect of the fourth example. Because the water is not left in the air blowing chamber 107, the rust of the air blowing chamber 107 can be prevented.

### [Eighth Example]

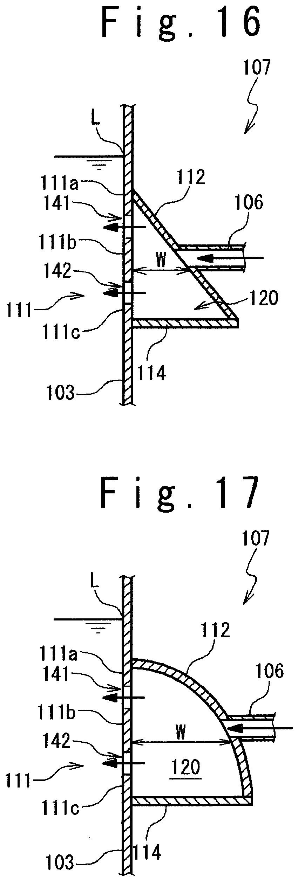

Referring to FIG. 16, the frictional resistance reduction unit 104 according to an eighth example serving to explain aspects of the present invention will be described. The frictional resistance reduction unit 104 according to the eighth example is similar to the frictional resistance reduction unit 104 according to the fourth example except for the following description.

In the air blowing chamber 107 of the frictional resistance reduction unit 104 according to the present example, the diffusion plate 116 and ceiling plate 113 are not provided. The front plate 111 contains an upper stage region 111a, a middle stage region 111b under the upper stage region 111a and a lower stage region 111c under the middle stage region 111b. The plurality of upper stage air blowing holes 141 are formed in the upper stage region 111a and the plurality of lower stage air blowing holes 142 are formed in the lower stage region 111c. The plurality of air blowing holes 140 are formed only in the upper stage region 111a and the lower stage region 111c and no air blowing hole is not formed in the middle stage region 111b. Moreover, the back plate 112 is diagonally provided in such a manner that the interval W between the front plate 111 and the back plate 112 becomes wider in the lower position. The air is blown out for the middle stage region 111b from the air supply pipe 106.

According to the present example, because the air blowing chamber 107 is arranged in the hull 101, the frictional resistance reduction unit 104 does not have any part to protrude to the underwater in the outside of the hull 101. Moreover, because the air is blown out from the air supply pipe 106 for the middle stage region 111b, the air hits against the middle stage region 111b, is diffused in the in-chamber space 120 to the direction from the bow section to the stern section (the longitudinal direction of the air blowing chamber 7), and then is blown out to the outboard underwater. Therefore, the air can be uniformly blown out from the plurality of upper stage air blowing holes 141 and air blowing holes 142 which are formed in the direction from the bow section to the stern section. Moreover, because the interval W between the front plate 111 and the back plate 112 becomes wider in the lower position, the lack of a flow quantity of the air which is blown out from the lower stage air blowing holes 142 due to high outboard water pressure in the position of the lower stage air blowing holes 142, compared with the outboard water pressure in the position of the upper stage air blowing holes 141 can be suppressed. Moreover, because the ceiling plate and the back plate are replaced by a single back plate 112 in the present example although the air blowing chamber 107 is formed by two plates in the fourth example, the structure of the air blowing chamber 107 according to the present example can be simplified.

### [Ninth Example]

Referring to FIG. 17, the frictional resistance reduction unit 104 according to the ninth example serving to explain aspects of the present invention will be described. The frictional resistance reduction unit 104 according to the ninth example is similar to the frictional resistance reduction unit 104 according to the eighth example except for the following description. In the present example, the back plate 112 is curved. The lower portion of the back plate 112 is arranged opposite to the front plate 111. That is, the lower portion of the back plate 112 is arranged to put the in-chamber space 120 as the space in the air blowing chamber 107 between them and to face the lower portion of the front plate 111. Also, the upper portion of the back plate 112 and the bottom plate 114 are arranged to sandwich the in-chamber space 120 from the bottom and the top.

According to the present example, because the air blowing chamber 107 is arranged in the hull 101, the frictional resistance reduction unit 104 does not have a part to protrude from the hull 101 into the underwater. Moreover, the air is blown out from the air supply pipe 106 to the middle stage region 111b, hits in the middle stage region 111b to diffuse in the in-chamber space 120 to the direction from the bow section to the stern section (the longitudinal direction of the air blowing chamber 107), and then is blown into the outboard underwater. Therefore, the air can be uniformly blown out from the plurality of upper stage air blowing holes 141 and lower stage air blowing holes 142 formed in the direction from the bow section to the stern section. Moreover, because the interval W between the front plate 111 and the back plate 112 becomes wider in the lower position, the lack of a flow quantity the air which is blown out from the lower stage air blowing holes 142 due to high outboard water pressure in the position of the lower stage air blowing holes 142 compared with the outboard water pressure in the position of the upper stage air blowing holes 141 can be restrained. Moreover, the ceiling plate and the back plate are formed by the single curved back plate 112 in the present example although the air blowing chamber 107 is formed by two plates in the fourth example. Therefore, the structure of the air blowing chamber 107 according to the present example can be simplified. It should be noted that the curved back plate 112 can be easily formed from the pipe material.

### [Tenth Example]

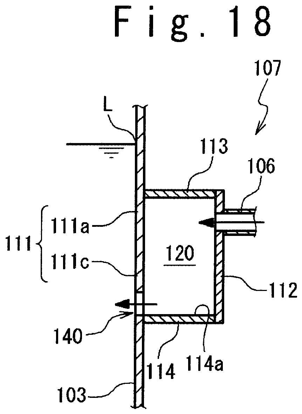

Referring to FIG. 18, the frictional resistance reduction unit 104 according to a tenth example serving to explain aspects of the present invention will be described. The frictional resistance reduction unit 104 according to the tenth example is similar to the frictional resistance reduction unit 104 according to the third example except for the following description.

In the present example, the front plate 111 contains the upper stage region 111a and the lower stage region 111c under the upper stage region 111a. The bottom plate 114 forms the bottom plane 114a of the air blowing chamber 107. The plurality of air blowing holes 140 are formed only in the lower stage region 111c and are not formed in the upper stage region 111a. The plurality of air blowing holes 140 are arranged in a position as lower as possible of the air blowing chamber 107. For example, the plurality of air blowing holes 140 are arranged in the height position of the bottom plane 114a. The diffusion plate 116 is not provided for the in-chamber space 120. The air is blown out from the air supply pipe 106 for the upper stage region 111a.

According to the present example, because the air blowing chamber 107 is arranged in the hull 101, the frictional resistance reduction unit 104 does not have any part to protrude outside the hull 101 in underwater. Moreover, the air is blown out from the air supply pipe 106 to the upper stage region 111a, hits the upper stage region 111a to diffuse in the in-chamber space 120 into the direction from the bow section to the stern section (the longitudinal direction of the air blowing chamber 107), and then is blown out to the outboard underwater. Therefore, the air can be uniformly blown out from the plurality of air blowing holes 140 formed into the direction from the bow section to the stern section. Moreover, because the plurality of air blowing holes 140 are arranged in the height of the bottom plane 114a so as not to leave water in the air blowing chamber 107, the air can be efficiently blown out from the plurality of air blowing holes 140. Because the water is not left in the air blowing chamber 107, the rust of the air blowing chamber 107 can be prevented.

It should be noted that when the front plate 111 contains a middle stage region arranged between the upper stage region 111a and the lower stage region 111c, the air may be blown for the middle stage region from the air supply pipe 106. The air supply pipe 106 is connected with the back plate 112 at the height which is different from the height of the plurality of air blowing holes 140. The plurality of air blowing holes 140 may be arranged in the position on the air blowing chamber 107.

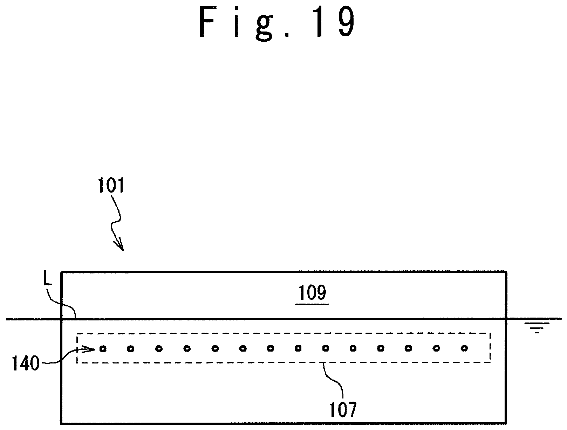

It should be noted that various modifications may be carried out to the frictional resistance reduction apparatus and the ship according to the third to tenth examples. For example, when the front portion (the bow portion) is not squeezed like a catamaran or a barge in case of seeing from the above, the longitudinal direction of the air blowing chamber 107 coincident with the ship width direction as shown in FIG. 19, and the plurality of air blowing holes 140 are formed in the ship width direction in a bow front portion 109 of the hull 101. Even when the plurality of air blowing holes 140 are formed in the bow front portion 109, the plurality of air blowing holes 140 may contain the plurality of upper stage air blowing holes 141 and the plurality of lower stage air blowing holes 142. Also, the plurality of air blowing holes 140 may be replaced by one longer hole 140 which is formed in the direction from the bow section to the stern section or the ship width direction. The plurality of upper stage air blowing holes 141 may be replaced by a single longer hole 141 formed along the direction from the bow section to the stern section or the ship width direction. The plurality of lower stage air blowing holes 142 may be replaced by a single longer hole 142 formed along the direction from the bow section to the stern section or the ship width direction. Here, the longer holes 140, 141, 142 are slit holes, pressed circle-type holes, elliptical holes or tetrahedron holes. Also, the slit hole 130 may be replaced by a circle hole, an elliptical hole or a tetrahedron hole. The front plate 111 may be a part of the hull shell plating 103 as mentioned above, and may be a plate which is attached to a hole formed for the hull shell plating 103. Also, any of the third to tenth examples can be combined.

### [Eleventh Example]

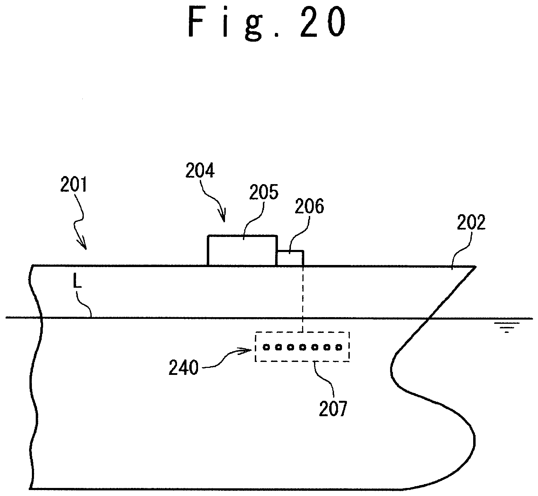

Referring to FIG. 20, the ship according to an eleventh example serving to explain aspects of the present invention is composed of a hull 201 and a frictional resistance reduction unit 204. The frictional resistance reduction unit 204 is composed of an air supply section 205 such as a blower and a compressor, an air supply pipe 206 and an air blowing chamber 207. The air blowing chamber 207 is arranged in the position which is lower than the draft line L in the hull 201. The air supply pipe 206 supplies the air from the air supply section 205 to the air blowing chamber 207. The air blown out to the outboard underwater from the air blowing chamber 207 through the plurality of air blowing holes 240 formed in the direction from the bow section to the stern section in the ship bow side 202 of the hull 201. The air blown out from the plurality of air blowing holes 240 covers the surface of the hull 201. Thus, the frictional resistance of hull 201 can be reduced.

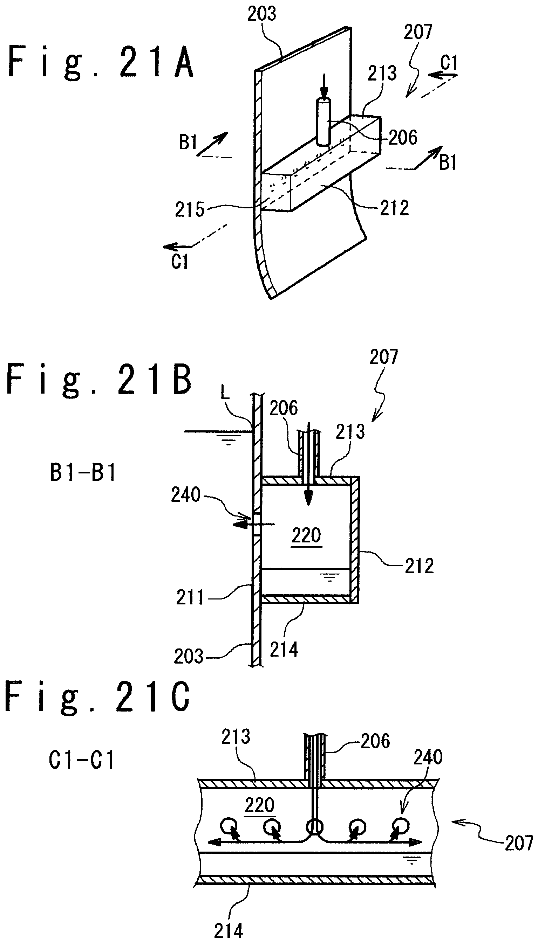

Referring to FIG. 21A, the air blowing chamber 207 has a box-type structure which does not have any part to protrude from the shell plating 203 into overboard. The air blowing chamber 207 is composed of a back plate 212, a ceiling plate 213 and side plates 215. The side plates 215 are arranged in the both ends in the longitudinal direction of the air blowing chamber 207, i.e. the both ends of the air blowing chamber 207 in the direction from the bow section to the stern section. The air supply pipe 206 is connected with the ceiling plate 213.

Referring to FIG. 21B, the air blowing chamber 207 is further composed of a front plate 211 as a part of the shell plating 203 and a bottom plate 214. The plurality of air blowing holes 240 are formed in the front plate 211. The back plate 212 is arranged to oppose to the front plate 211. That is, the back plate 212 is arranged to put an in-chamber space 220 as a space of the air blowing chamber 207 between the back plate 212 and the front plate 211. The ceiling plate 213 and the bottom plate 214 are arranged to put the in-chamber space 220 between them. The ceiling plate 213 is nearer the draft line L than the bottom plate 214. The air supply pipe 206 is connected with the ceiling plate 213 such that the air is blown into the lower direction in the in-chamber space 220.

Referring to FIG. 21C, the air is blown in the in-chamber space 220 from the air supply pipe 206 into the lower direction, hits the surface of the water left in the in-chamber space 220 to diffuse into the direction from the bow section to the stern section (the longitudinal direction of the air blowing chamber 207), and is blown out from the plurality of air blowing holes 240 into the outboard underwater. It should be noted that when the water is not left in the in-chamber space 220, the air is blown in the in-chamber space 220 from the air supply pipe 206 into the lower direction, hits against the bottom plate 214 to diffuse into the direction from the bow section to the stern section (the longitudinal direction of the air blowing chamber 207), and is blown out from the plurality of air blowing holes 240 into the outboard underwater.

According to the present example, because the air blowing chamber 207 is arranged in the hull 201, the frictional resistance reduction unit 204 does not have any part to protrude from the hull 201 in the underwater. Moreover, because the air is blown down into the in-chamber space 220 from the air supply pipe 206, the air hits against the surface of the water or the bottom plate 214 in the in-chamber space 220 to diffuse into the direction from the bow section to the stern section, and is blown out into the outboard underwater. Therefore, the air can be uniformly blown out from the plurality of air blowing holes 240 formed in the direction from the bow section to the stern section. Moreover, because the air supply pipe 206 is connected with the ceiling plate 213, it can be prevented that the water which enters from the outboard into the in-chamber space 220 invades the air supply pipe 206 as far as the air continues to be supplied from the air supply pipe 206 to the in-chamber space 220. Because the water does not enter the air supply pipe 206, the rust of the air supply pipe 206 can be prevented.

### [First Embodiment]

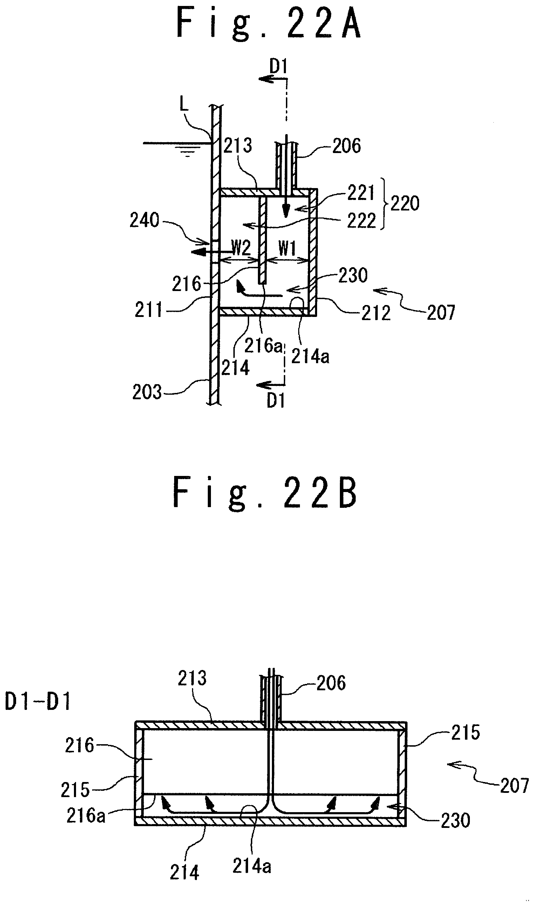

Referring to FIG. 22A, the frictional resistance reduction unit 204 according to first embodiment of the present invention will be described. The frictional resistance reduction unit 204 according to the first embodiment is similar to the frictional resistance reduction unit 204 according to the eleventh example except for the following description. The air blowing chamber 207 of the frictional resistance reduction unit 204 according to the first embodiment is further composed of a diffusion plate 216 which partitions the in-chamber space 220 into a first part 221 on the side of the back plate 212 and a second part 222 on the side of the front plate 211. The interval between the diffusion plate 216 and the back plate 212 is shown by W1 and the interval between the diffusion plate 216 and the front plate 211 is shown by W2. The air supply pipe 206 is connected with the ceiling plate 213 to blow the air in the first part 221. The bottom plate 214 forms a bottom plane 214a of the air blowing chamber 207. A slender slit hole 230 is formed in the direction from the bow section to the stern section (the longitudinal direction of the air blowing chamber 207) between a lower end 216a of the diffusion plate 216 and the bottom plane 214a. The first part 221 and the second part 222 are connected through the slit hole 230 below the diffusion plate 216 but are not connected above the diffusion plate 216. The first part 221 and the second part 222 are connected only under the diffusion plate 216.

Referring to FIG. 22B, the air is blown down in the first part 221 of the in-chamber space 220 from the air supply pipe 206, hits against the surface of the water collected in the in-chamber space 220 or the bottom plate 214 to diffuse in the direction from the bow section to the stern section (the longitudinal direction of the air blowing chamber 207), flows into the second part 222 of the in-chamber space 220 through the slit hole 230 provided under the diffusion plate 216 and is blown out from the plurality of air blowing holes 240 into the outboard underwater.

According to the present embodiment, the air diffusion in the direction from the bow section to the stern section (the longitudinal direction of the air blowing chamber 207) is made more stable, in addition to the effect by the eleventh example. There is an effect that the air blowing from the plurality of air blowing holes 240 is more made stable for its purpose. Moreover, because the first part 221 and the second part 222 in the in-chamber space 220 are connected under the diffusion plate 216 but are not connected above the diffusion plate 216, it can be prevented that the water entering from the outboard into the second part 222 reaches the first part 221, as far as the air continues to be supplied to the first part 221 from the air supply pipe 206. Therefore, rust of a portion surrounding the first part 221 of the air blowing chamber 207 can be prevented.

Moreover, because the interval W1 between the diffusion plate 216 and the back plate 212 is made wider than the interval W2 between the diffusion plate 216 and the front plate 211, the air diffusion in the direction from the bow section to the stern section (the longitudinal direction of the air blowing chamber 207) in the first part 221 of the in-chamber space 220 and the air blowing from the plurality of air blowing holes 240 can be made more stable.

### [Second Embodiment]

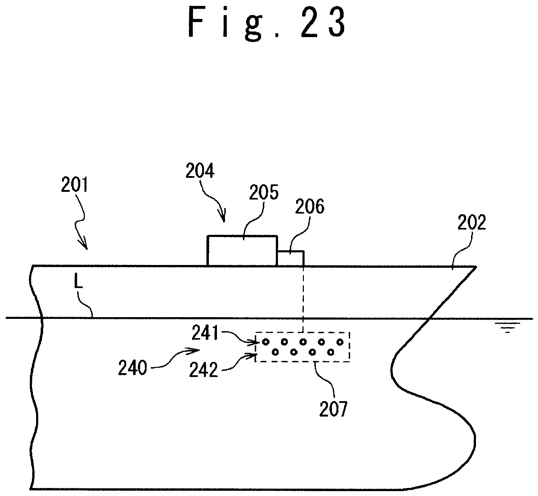

Referring to FIG. 23, the frictional resistance reduction unit 204 according to a second embodiment of the present invention will be described. The frictional resistance reduction unit 204 according to the second embodiment is similar to the frictional resistance reduction unit 204 according to the first embodiment except for the following description. The air blowing holes 240 of the frictional resistance reduction unit 204 according to the second embodiment contain a plurality of upper stage air blowing holes 241 and a plurality of lower stage air blowing holes 242 provided in the position which is lower than the plurality of upper stage air blowing holes 241.

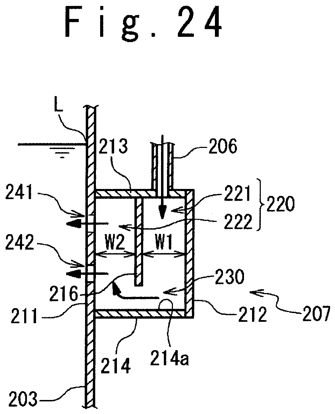

Referring to FIG. 24, the air is blown down into the first part 221 of the in-chamber space 220 from the air supply pipe 206, hits against the surface of the water collected in the in-chamber space 220 or the bottom plate 214 to diffuse in the direction from the bow section to the stern section (the longitudinal direction of the air blowing chamber 207), flows into the second part 222 of the in-chamber space 220 through the slit hole 230 provided under the diffusion plate 216, and is blown out from the plurality of air blowing holes 241 and 242 into the outboard underwater.

According to the present embodiment, in addition to the effect by the first embodiment, there is an effect that the lack of a flow quantity of the air which is blown from the lower stage air blowing holes 242 due to high outboard water pressure in the position of the lower stage air blowing holes 242, compared with the outboard water pressure in the position of the upper stage air blowing holes 241 is restrained.

Moreover, because the interval W1 between the diffusion plate 216 and the back plate 212 is made wider than the interval W2 between the diffusion plate 216 and the front plate 211, the air diffusion in the direction from the bow section to the stern section (the longitudinal direction of the air blowing chamber 207) in the first part 221 of the in-chamber space 220 and the air blowing from the plurality of upper stage air blowing holes 241 and the plurality of lower stage air blowing holes 242 are made more stable.

It should be noted that it is desirable that the plurality of upper stage air blowing holes 241 and the plurality of lower stage air blowing holes 242 are arranged to be shifted in the position in the direction from the bow section to the stern section. By such an alternate arrangement, compared with the case that the position of the plurality of upper stage air blowing holes 241 in the direction from the bow section to the stern section and the position of the plurality of lower stage air blowing holes 242 in the direction from the bow section to the stern section are the same, the strength of the front plate 211 where the plurality of upper stage air blowing holes 241 and the plurality of lower stage air blowing holes 242 are formed becomes high.

### [Twelfth Example]

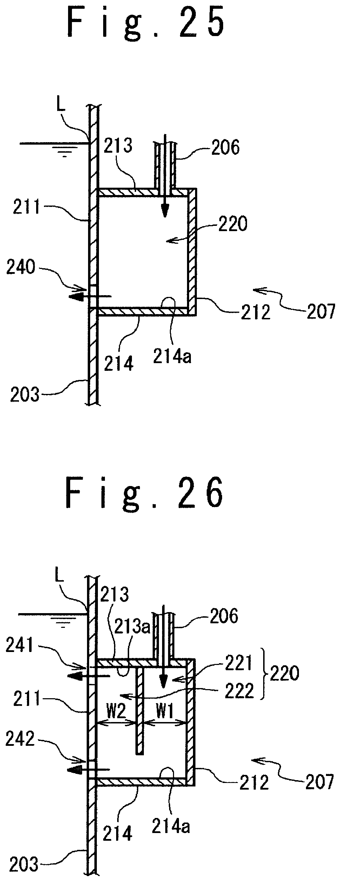

Referring to FIG. 25, the frictional resistance reduction unit 204 according to a twelfth example serving to explain aspects of the present invention will be described. The frictional resistance reduction unit 204 according to the twelfth example is similar to the frictional resistance reduction unit 204 according to the first example 1 except for the following description. In the air blowing chamber 207 of the frictional resistance reduction unit 204 according to the twelfth example, the bottom plate 214 forms a bottom plane 214a of the air blowing chamber 207. The plurality of air blowing holes 240 are arranged in the position under the air blowing chamber 207 as far as it is possible. For example, the plurality of air blowing holes 240 are arranged in the height position of the bottom plane 214a.

According to the present example, there is an effect that the air can be efficiently blown out from the plurality of air blowing holes 240 so as not to leave water in the air blowing chamber 207, in addition to the effect of the eleventh example. Because the water is not left in the air blowing chamber 207, the rust of the air blowing chamber 207 can be prevented.

### [Third Embodiment]

Referring to FIG. 26, the frictional resistance reduction unit 204 according to a third embodiment of the present invention will be described. The frictional resistance reduction unit 204 according to the third embodiment is similar to the frictional resistance reduction unit 204 according to the second embodiment except for the following description. In the air blowing chamber 207 of the frictional resistance reduction unit 204 according to the third embodiment, the bottom plate 21 forms the bottom plane 214a of the air blowing chamber 207 and the ceiling plate 213 forms the ceiling plane 213a of the air blowing chamber 207. The plurality of air blowing holes 241 are arranged in a position as upper as possible of the air blowing chamber 207, and the plurality of air blowing holes 242 are arranged in a position as lower as possible of the air blowing chamber 207. For example, the plurality of air blowing holes 241 are arranged in the height of the ceiling plane that 213a and the plurality of air blowing holes 242 are arranged in the height of the bottom plane 214a.

According to the present embodiment, there is an effect that the air can be efficiently blown out from the plurality of air blowing holes 241 and 242 so as not to leave water in the air blowing chamber 207, in addition to the effect of the second embodiment. Because the water is not left in the air blowing chamber 207, the rust of the air blowing chamber 207 can be prevented.

### [Thirteenth Example]

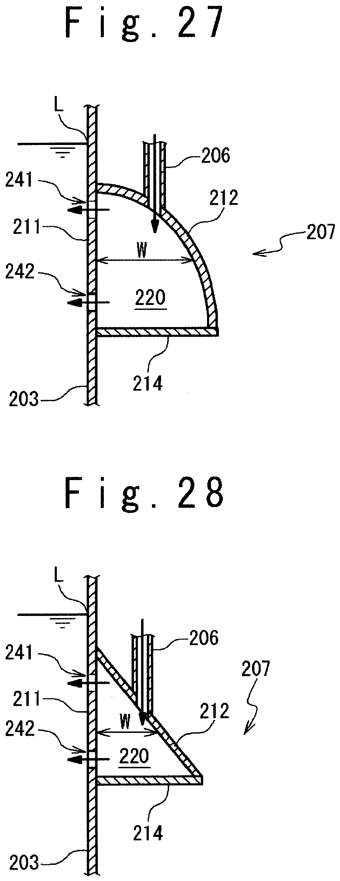

Referring to FIG. 27, the frictional resistance reduction unit 204 according to a thirteenth example serving to explain aspects of the present invention will be described. The frictional resistance reduction unit 204 according to the thirteenth example is similar to the frictional resistance reduction unit 204 according to the second embodiment except for the following description. In the air blowing chamber 207 of the frictional resistance reduction unit 204 according to the thirteenth example, the diffusion plate 216 and the ceiling plate 213 are not provided and the back plate 212 is curved. The lower portion of the back plate 212 is arranged opposite to the front plate 211. That is, the lower portion of the back plate 212 is arranged to put the in-chamber space 220 as the space of the air blowing chamber 207 between the lower portion and the front plate 211. The upper portion of the back plate 212 and the bottom plate 214 are arranged to put the in-chamber space 220 between them. The air supply pipe 206 is connected with the upper portion of the back plate 212 such that the air is blown down into the in-chamber space 220. The interval W between the front plate 211 and the back plate 212 becomes wider in the lower position.

According to the present example, because the air blowing chamber 207 is arranged in the hull 201, the frictional resistance reduction unit 204 does not have any part to protrude from the hull into the underwater. Moreover, because the air blows down into the in-chamber space 220 from the air supply pipe 206, the air hits against the surface of the water in the in-chamber space 220 or the bottom plate 214 to diffuse in the direction from the bow section to the stern section and then is blown out to the outboard underwater. Therefore, the air can be uniformly blown out from the plurality of upper stage air blowing holes 241 and lower stage air blowing holes 242 which are formed in the direction from the bow section to the stern section. Moreover, because the interval W between the front plate 211 and the back plate 212 becomes wider in the lower position, the lack of a flow quantity of the air which is blown out from the lower stage air blowing holes 242, due to the high outboard water pressure in the position of the lower stage air blowing holes 242, compared with the outboard water pressure in the position of the upper stage air blowing holes 241 can be suppressed. Moreover, although the air blowing chamber 207 is formed by two plates in the second embodiment, the ceiling plate and the back plate 212 are replaced by the curved back plate 212 in the present example so that the structure of the air blowing chamber 207 according to the present example is simplified. It should be noted that the curved back plate 212 can be easily formed from a pipe material.

### [Fourteenth Example]

Referring to FIG. 28, the frictional resistance reduction unit 204 according to a fourteenth example serving to explain aspects of the present invention will be described. The frictional resistance reduction unit 204 according to the fourteenth example is similar to the frictional resistance reduction unit 204 according to the thirteenth example except for the following description. In this example, the back plate 212 is diagonally provided such that the interval W between the front plate 211 and the back plate 212 becomes wider in the lower position. The air supply pipe 206 is connected with the back plate 112 such that the air is blown down into the in-chamber space 220.

According to the present example, because the air blowing chamber 207 is arranged in the hull 201, the frictional resistance reduction unit 204 does not have any part to protrude from the hull to the underwater. Moreover, because the air is blown down into the in-chamber space 220 from the air supply pipe 206, the air hits against the surface of the water or the bottom plate 214 in the in-chamber space 220 to diffuse in the direction from the bow section to the stern section, and is blown out to the outboard underwater. Therefore, the air can be uniformly blown out from the plurality of upper stage air blowing holes 241 and lower stage air blowing holes 242 which are formed in the direction from the bow section to the stern section. Moreover, because the interval W between the front plate 211 and the back plate 212 becomes wider in the lower position, the lack of a flow quantity of the air which is blown out from the lower stage air blowing holes 242, due to the high outboard water pressure in the position of the lower stage air blowing holes 242, compared with the outboard water pressure in the position of the upper stage air blowing holes 241 can be restrained. Moreover, although the air blowing chamber 207 is formed by two plates in the second embodiment, the air blowing chamber 207 is formed from a single flat back plate 212 in the present example, so that the structure of the air blowing chamber according to the present example is simplified.

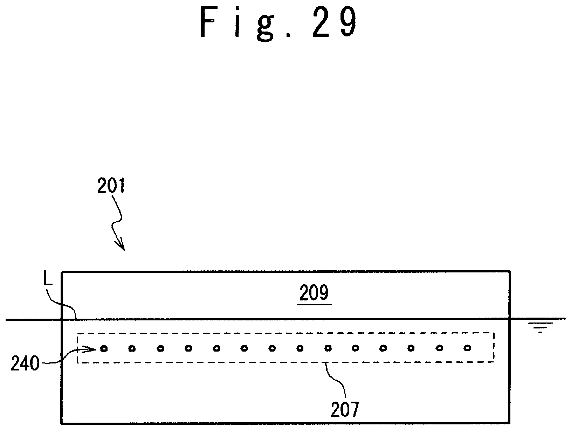

It should be noted that various modifications may be carried out to the frictional resistance reduction apparatus and the ship according to the eleventh to fourteenth examples and first to third embodiments. For example, when the front section (the bow section) is not squeezed, like a catamaran or a barge in case of seeing from the above, the longitudinal direction of the air blowing chamber 207 is coincident with the ship width direction as shown in FIG. 29, and the plurality of air blowing holes 240 are formed in the ship width direction in the bow front section 209 of the hull 201. When the plurality of air blowing holes 240 are formed in the bow front section 209, the plurality of air blowing holes 240 may contain the plurality of upper stage air blowing holes 241 and the plurality of lower stage air blowing holes 242. Also, the plurality of air blowing holes 240 may be replaced by one longer hole 240 formed in the direction from the bow section to the stern section or in the ship width direction. Also, the plurality of upper stage air blowing holes 241 may be replaced by one longer hole 241 formed in the direction from the bow section to the stern section or the ship width direction, and the plurality of lower stage air blowing holes 242 may be replaced by one longer hole 242 formed in the direction from the bow section to the stern section or the ship width direction. Here, the longer holes 240, 241, 242 are slit holes, pressed-circle-type holes, elliptical holes or tetrahedron holes. Also, the slit hole 230 may be replaced by the circle hole, the elliptical hole or the tetrahedron hole. The front plate 211 may be a part of the shell plating 203 as mentioned above, and may be a plate attached to the hole provided for the shell plating 203. Also, the eleventh to fourteenth examples and the first to third embodiments may be combined.

## Claims

1. A ship comprising
a hull (201); and
a frictional resistance reduction apparatus comprising:
an air blowing chamber (207) arranged in the hull (201) in a position which is lower than a draft line (L); and
an air supply pipe (206) arranged to supply air into said air blowing chamber (207),
wherein the air blowing chamber (207) comprises air blowing holes (240;241,242) through which the air supplied from said air supply pipe (207) is blown out, in operation, into outboard underwater from said air blowing chamber (207),
wherein said air blowing holes (240;241,242) are formed in a direction from a bow section to a stern section in a ship side bow section of the hull (201), and
wherein said air blowing chamber (207) comprises:
a front plate (211),
a back plate (212) arranged to oppose to said front plate (211),
a ceiling plate (213),
a bottom plate (214), and
side plates (215) arranged on both ends in a longitudinal direction of said air blowing chamber (207);
**characterized in that**
said air blowing holes (240, 241, 242) are formed in the front plate,
said air supply pipe (206) is connected with the ceiling plate (213) such that the air is blown downward into a space (220) of said air blowing chamber (207), and
a diffusion plate (216) is disposed to divide a chamber internal space as the space (220) of said air blowing chamber (207) into a first part (221) on a side of said back plate (242) and a second part (222) on a side of said front plate (211),
wherein said first part (221) and said second part (222) are connected below said diffusion plate (216), and
wherein said air supply pipe (206) is connected with the part (221) of said air blowing chamber (207) which is between said diffusion plate (216) and said back plate (242).

2. The ship according to claim 1, wherein said air blowing holes (240) are formed in a middle portion of said front plate (211) in a vertical direction.

3. The ship according to claim 1, wherein said air blowing holes (240) are formed in a lowermost portion of said front plate (211) in a vertical direction.

4. The ship according to claim 1, wherein said air blowing holes (241) are formed in an uppermost portion of said front plate (211) in a vertical direction.

5. The ship according to claim 1, wherein said air blowing holes (241,242) are formed in an upper and a lower portion of said front plate (211) in a vertical direction.

## Patentansprüche

1. Ein Schiff mit
einem Rumpf (201), und
einer Reibungswiderstandsverringerungsvorrichtung mit:
einer Luftblaskammer (207), die in dem Rumpf (201) in einer Position angeordnet ist, die tiefer liegt als eine Tiefgangslinie (L), und
einem Luftzuführrohr (206), das angeordnet ist, um Luft in die Luftblaskammer (207) zuzuführen,
wobei die Luftblaskammer (207) Luftblaslöcher (240;241,242) aufweist, durch die im Betrieb die von dem Luftzuführrohr (207) zugeführte Luft von der Luftblaskammer (207) in Außenbordunterwasser ausgeblasen wird,
wobei die Luftblaslöcher (240;241,242) in einer Richtung von einer Bugsektion zu einer Hecksektion in einer Schiffsseitenbugsektion des Rumpfs (201) ausgebildet sind, und
wobei die Luftblaskammer (207) aufweist:
eine Frontplatte (211),
eine Rückplatte (212), die angeordnet ist, um der Frontplatte (211) gegenüberzuliegen,
eine Deckenplatte (213),
eine Bodenplatte (214), und
Seitenplatten (215), die an beiden Enden in einer Längsrichtung der Luftblaskammer (207) angeordnet sind,
**dadurch gekennzeichnet, dass**
die Luftblaslöcher (240;241,242) in der Frontplatte ausgebildet sind,
das Luftzuführrohr (206) mit der Deckenplatte (213) so verbunden ist, dass die Luft in einen Raum (220) der Luftblaskammer (207) nach unten eingeblasen wird, und
eine Diffusionsplatte (216) angeordnet ist, um einen Kammerinnenraum als den Raum (220) der Luftblaskammer (207) in einen ersten Teil (221) an einer Seite der Rückplatte (242) und einen zweiten Teil (222) an einer Seite der Frontplatte (211) zu unterteilen,
wobei der erste Teil (221) und der zweite Teil (222) unter der Diffusionsplatte (216) verbunden sind, und
wobei das Luftzuführrohr (206) mit dem Teil (221) der Luftblaskammer (207) verbunden ist, der sich zwischen der Diffusionsplatte (216) und der Rückplatte (242) befindet.

2. Das Schiff gemäß Anspruch 1, wobei die Luftblaslöcher (240) in einen Mittelabschnitt der Frontplatte (211) in einer vertikalen Richtung ausgebildet sind.

3. Das Schiff gemäß Anspruch 1, wobei die Luftblaslöcher (240) in einem untersten Abschnitt der Frontplatte (211) in einer vertikalen Richtung ausgebildet sind.

4. Das Schiff gemäß Anspruch 1, wobei die Luftblaslöcher (241) in einem obersten Abschnitt der Frontplatte (211) in einer vertikalen Richtung ausgebildet sind.

5. Das Schiff gemäß Anspruch 1, wobei die Luftblaslöcher (241,242) in einem oberen und einem unteren Abschnitt der Frontplatte (211) in einer vertikalen Richtung ausgebildet sind.

## Revendications

1. Navire, comprenant
une coque (201) ; et
un système de diminution de la résistance au frottement, comprenant :
une chambre (207) d'insufflation d'air, disposée dans la coque (201) en une position, qui est plus basse qu'une ligne (L) de tirant d'eau ; et
un conduit (206) d'alimentation en air, conçu pour envoyer de l'air dans la chambre (207) d'insufflation d'air,
dans lequel la chambre (207) d'insufflation d'air comprend des trous (240 ; 241, 242) d'insufflation, par lesquels l'air envoyé par le conduit (206) d'alimentation en air est insufflé à l'extérieur, en fonctionnement, dans la carène hors bord à partir de la chambre (207) d'insufflation d'air,
dans lequel les trous (240 ; 241, 242) d'insufflation d'air sont formés dans une direction allant d'une partie avant à une partie arrière, dans une partie d'avant latérale de navire de la coque (201), et
dans lequel la chambre (207) d'insufflation d'air comprend :
une plaque (211) avant,
une plaque (212) arrière opposée à la plaque (211) avant,
une plaque (213) de plafond,
une plaque (214) de fond, et
des plaques (215) latérales, disposées des deux côtés dans une direction longitudinale de la chambre (207) d'insufflation d'air ;
**caractérisé en ce que**
les trous (240, 241, 242) d'insufflation d'air sont formés dans la plaque avant,
le conduit (206) d'alimentation en air est relié à la plaque (213) de plafond, de manière à insuffler l'air vers le bas dans un espace (220) de la chambre (207) d'alimentation en air, et
une plaque (216) de diffusion est disposée de manière à subdiviser un espace intérieur de chambre, en tant qu'espace (220) de la chambre (207) d'insufflation d'air, en une première partie (221) du côté de la plaque (242) arrière et en une deuxième partie (222) du côté de la plaque (211) avant,
dans lequel la première partie (221) et la deuxième partie (222) communiquent en-dessous de la plaque (216) de diffusion, et
dans lequel le conduit (206) d'alimentation en air communique avec la partie (221) de la chambre (207) d'insufflation d'air, qui est entre la plaque (216) de diffusion et la plaque (242) arrière.

2. Navire suivant la revendication 1, dans lequel les trous (240) d'insufflation d'air sont formés dans une partie médiane de la plaque (211) avant suivant une direction verticale.

3. Navire suivant la revendication 1, dans lequel les trous (240) d'insufflation d'air sont formés dans une partie la plus basse de la plaque (211) avant suivant une direction verticale.

4. Navire suivant la revendication 1, dans lequel les trous (241) d'insufflation d'air sont formés dans une partie la plus haute de la plaque (211) avant suivant une direction verticale.

5. Navire suivant la revendication 1, dans lequel les trous (241, 242) d'insufflation d'air sont formés dans une partie supérieure et dans une partie inférieure de la plaque (211) avant suivant une direction verticale.
